Europäisches Patentamt

European Patent Office

Office européen des brevets

(19)

(11) **EP 1 432 168 A1**

(12) **EUROPEAN PATENT APPLICATION**

(43) Date of publication:
**23.06.2004 Bulletin 2004/26**

(51) Int Cl.7: **H04L 5/02**

(21) Application number: **02425773.5**

(22) Date of filing: **16.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(71) Applicant: **Urmet Sistemi S.p.a.**
**00128 Roma (IT)**

(72) Inventors:
• **Ragozini, Arturo**
  **80127 Napoli (IT)**

• **Testi, Giulio**
  **00135 Roma (IT)**
• **Giusto, Roberto**
  **00012 Guidonia (Prov. Roma) (IT)**
• **Renno, David**
  **00142 Roma (IT)**

(74) Representative: **Spandonari, Carlo, Dr. Ing. et al**
  **Spandonari & Modiano s.r.l.**
  **corso Duca degli Abruzzi 16**
  **10129 Torino (IT)**

(54) **Multicarrier CDMA transmission method using Hadamard time-frequency spreading codes, and a transmitter and a receiver for said method**

(57)     A new architecture for the downlink of a multi-carrier CDMA (code-division multiple-access) system comprises a double spreading scheme, both in frequency (T3) and time (T2), where both time and frequency codes are suitable generalizations of Hadamard codes and are implemented via low complexity transforms. Both spreading and despreading at transmitter and receiver share the same complexity, furthermore the despreading at the receiver addresses joint time-frequency tracking and symbol recovery. In fact, owing to code structure, the control signals of DLL (delay-lock loop) and FLL (frequency-lock loop) are directely synthesized from the despreading output with reduced extra processing. The proposed receiver is robust against multipath and interference, nevertheless an equalizer is provided in the receiver loop in order to jointly counteract effects of frequency selective channels both on accuracy of time-frequency tracking and on orthogonality among data codes.

Figure 2

**Description**

**1. Background of the invention**

1.1 Field of the invention

This invention relates to data communications, and more particularly is concerned with a new and improved method for transmitting and receiving complex symbols, based on multicode time and frequency spreading, as well as on a transmitter and a receiver for carrying out the method. The transmitter and receiver are suitable for use in the direct link of a CDMA architecture, for point-to-multi-point transmissions and in a point-to-point communication system.

1.2 Description of Related Art

The field of CDMA (code-division multiple-access) communications is concerned with multiplexing different symbol streams through the same channel by modulating each stream by a coded waveform whose bandwidth is higher than the symbol rate. The ratio of code rate to symbol rate of a stream is referred to as spreading factor (SF). For a given SF, variable-rate communications are obtained either by devoting a number of codes to the same symbol stream or by varying the informational content per symbol. In order to extract a symbol stream, the receiver has to be aware not only of which codes are used by the transmitter but also of the symbol timing and frequency offsets of its internal synchronization sources with respect to the received signal. At the receiver, these physical parameters have to be initially extracted from the observed signal (acquisition) and their estimates have to be continuously updated (tracking) in order to counteract residual jitters of symbol time and frequency. Many approaches are possible to the synchronization problem, depending on assumptions concerning transmitted signal, channel characteristics and noise/interference structure. In order to help the receiver in this task, the transmitter may forego a limited amount of its capacity by multiplexing data with pilot signals whose only purpose is to aid the receiver in acquiring/tracking the physical parameters. Actually, the MLE (Maximum Likelihood Estimator) of time and frequency offset in an AWGN (Additive White Gaussian Noise) channel for a known signal consists in maximizing the mean square absolute value of its time-frequency cross-correlation with the received signal. In this case the local accuracy of delay offset estimation increases with the bandwidth occupied by the processed signal, while the local accuracy in frequency offset estimation depends on the duration of the processed signal. Global accuracy (i.e. time-frequency gross errors related to local maxima) depends on the considered signal structure, or, more specifically, on the shape of its ambiguity function (refer to H. L. Van Trees, *Detection, Estimation, and Modulation Theory,* Part III - Radar/Sonar Signal Processing and Gaussian Signals in Noise, Chap. 10, Wiley, New York, 1971).

In the case of SS (Spread Spectrum) radio communications, the channel is usually modelled as a random, linear, frequency-selective and time-invariant with respect to symbol frame duration. Actually, because of non-idealities in the up/down conversion chains and of Doppler shifts, transmitted signals incur a time-variant channel with non-null Doppler band, and receivers require continuous frequency correction and tracking (usually at frame time). In a multipath channel the aforementioned time-frequency MLE (optimal for SS signals in AWGN channels) is no longer accurate as echoes can affect both global and local accuracy (echoes introduce new local maxima in the cross-correlation while their side-lobes alter the main-lobe shape and the global maximum position). As regards symbol detection, matched filter is no longer optimal, as echoes introduce self-interference and inter-symbol interference (ISI), thus degrading receiver noise margins. But, if simple SS communications can tolerate these effects, CDMA systems, and likewise multicode transmissions, may suffer severe performance degradation because of the increase of interference among signals spread by different codes. Actually, even in AWGN channels, multicode transmissions using an embedded pilot code suffer from performance degradation of time-frequency estimation caused by data code interference on time-frequency cross-correlations of the pilot because of non-perfect synchronization. Such inter-code interference (also affecting symbol detection) can be controlled, for a given choice of the code structure, by limiting the number of active codes. Multipath increases such interference and results in an additional reduction in the number of allowable codes for a given quality of the transmission (i.e. lower transmission efficiency).

It is a main object of the present invention to provide a method for efficiently spreading and despreading complex QAM (Quadrature Amplitude Modulation) symbols in multicode SS communications. The method provides *ad hoc* codes for spreading complex symbols both in time and frequency and falls in the broad class of multi-carrier CDMA architectures (see, e.g., Z. Wang, G. B. Giannakis, *Wireless Multicarrier Communications,* IEEE Signal Processing Magazine, pgs. 29-48, May 2000, and S. Hara, R. Prasad, *Overview of Multicarrier CDMA,* IEEE Communication Magazine, pgs. 126-133, December 1997).

It is also an object of the invention to provide a transmitter architecture for effectively spreading in time and frequency complex QAM symbols.

It is also an object of the invention to provide a corresponding receiver architecture, which does not require pilot codes for time-frequency tracking and hence allows maximal transmission efficiency and which can guarantee effective time-frequency tracking also in frequency selective fading channels.

It is a further object of the invention to provide a low complexity implementation of the quasi-optimal MLE for time-frequency tracking, which, exploiting the code structure, requires the processing of only a reduced number of despread data.

It is another object of the invention to provide a receiver architecture which also takes advantage from the equalization introduced to restore orthogonality among data codes for further improvement of the time-frequency tracking.

## 2. Summary of the invention

The invention achieves the above and other objects and advantages, such as will appear from the following disclosure, by a method spreading and despreading complex QAM symbols on time-frequency codes having the features set out in claim 1.

The invention also provides a transmitter having the features recited in claim 6 and a receiver having the features recited in claim 10.

The present invention is a novel and improved method and architecture for transmitting and receiving complex symbols in a multicode CDMA system. A double spreading scheme in frequency and time is provided, where the signal is synthesized as a linear combination of $K$ modulated orthogonal pulses (chips) in $M$ adjacent time intervals. The spreading codes are represented as $K \times M$ matrices where the coefficient of place $(k,l)$ modulates the pulse at frequency $k$ and position $l$. A set $\{\mathbf{C}^{u,v}\}$ of $KM$ orthogonal codes is presented, where the codes are in product form, i.e. $\mathbf{C}^{u,v}$ can be expressed as $\mathbf{f}_u \mathbf{g}_v{}^T$, where $\{\mathbf{f}_u\}_{u \in \{0,...,K\text{-}1\}}$ and $\{\mathbf{g}_u\}_{v \in \{0,...,M\text{-}1\}}$ are orthonormal frequency codes and orthonormal time codes, respectively. The system allows multicode communications where multiple codes modulating different complex symbols are jointly generated and detected. Both time and frequency codes are suitable generalizations of Walsh-Hadamard codes and are generated by an $O(n \log_2 n)$ algorithm. Signal in the time domain is obtained by applying an inverse fast-Fourier-transform (IFFT) to the frequency dimension of the matrix sum of modulated codes. Cyclic symbol extension and time windowing counteract multipath effects and reduce spectral bandwidth, respectively. Multicode spreading and despreading have the same complexity. The digital receiver tracks symbol timing and frequency offset resorting to a DLL-FLL tuned to the multicode received signal, under the assumption of random data. The receiver employs, as loop control, the gradient of the log-likelihood (quasi-optimal MLE in AWGN). The FLL corrects the estimated frequency offset by modulating the received signal in the time domain. In the DLL, sub-sampling time errors are compensated in the frequency domain, while coarse time errors are corrected by delaying the received signal of an integer number of samples. Owing to the code structure, the loop control signals can be implemented from the sole despread data, thus incurring only in a mild additional computational cost. This latter turns out to be proportional to $\log_2 MK$ operations, where, noticeably, the proportionality factor decreases for increasing transmission efficiency.

Because of the time-frequency spreading, DLL and FLL are robust against external interference and multipath; nevertheless, in order to guarantee a good detection performance with higher order constellations and full load multicode transmissions, the proposed receiver provides an adaptive equalizer able to counteract the effects of frequency selective channels by improving both accuracy of time-frequency tracking and orthogonality among data codes. Coherent detection is supported by recovering reference phase and amplitude from a pilot symbol on block by block basis. The superior time and frequency accuracy of the receiver allows higher order symbol constellations to be used. Even if the modulation format experimented is a ¾ 16 TCM, higher order constellations can be envisaged without problems.

## 3. Brief description of the drawings

Figure 1 is a diagrammatical representation of time-frequency codes used with the invention;
Figure 2 shows a DSP SW architecture implementing a transmitter according to the invention;
Figure 3 shows a DSP SW architecture implementing a receiver according to the invention;
Figure 4 is a diagram illustrating the working principles of the receiver loop;
Figure 5 is a diagram showing a linearized model of the receiver;
Figure 6 is showing the envelope of the transmitted chip symbols.

## 4. Detailed description of preferred embodiments

In section 4.1, time-frequency spreading and multicode modulation are described. In section 4.2, the basic structure of a receiver is disclosed and the inventive code structure is derived. In section 4.3, a multicode fast spreading/despreading is introduced. In section 4.4, the DLL-FLL loop of the invention is analyzed in frequency-selective fading. In section 4.5, the channel estimation algorithm is depicted and analyzed. In section 4.6, the impact of residual time and frequency errors on SNR is analyzed, while in section 4.7 the digital processing for transmitter and receiver is illustrated detailing its complexity and computational load.

4.1 Transmitter principles

The low-pass complex envelope of the transmitted signals (and the useful part of the received signals, as will become apparent in the following) is expressed as a linear combination of the modulated pulses (or chips):

$$\psi_{k,l+\frac{M}{2}}(t) \stackrel{\triangle}{=} e^{j2\pi\Delta f_c(k-\frac{K}{2})(t-lT)} p\left(t-lT\right),\qquad(1)$$

where $\Delta f_c$ is the frequency spacing and $T > 1/\Delta f_c$ is the pulse repetition time. With reference to Figure 6, the normalized raised cosine window $p(t)$ is given by:

$$p(t+\Delta) \stackrel{\triangle}{=} \begin{cases} \frac{\sqrt{\Delta f_c}}{2}\left[1+\cos\left(\pi\left(1+\frac{t}{\beta_{ro}T}\right)\right)\right] & 0 \le t < \beta_{ro}T, \\[2mm] \sqrt{\Delta f_c} & \beta_{ro}T \le t < T, \\[2mm] \frac{\sqrt{\Delta f_c}}{2}\left[1+\cos\left(\pi\frac{T-t}{\beta_{ro}T}\right)\right] & T \le t < T + \beta_{ro}T, \end{cases}\qquad(2)$$

with roll-off $\beta_{ro}$, useful cyclic prefix $T_{pr}$, cyclic postfix $T_{po}$,

$$\Delta \stackrel{\triangle}{=} \beta_{ro}T + T_{pr}$$

and

$$T_{pr} + T_{po} = (1 - \beta_{ro})T - \frac{1}{\Delta f_{c.}}$$

It is easy to check that, since $p(t)$ comprises a rectangular window of length $1/\Delta f_c$, if dot products are restricted to the intervals $[lT, lT+1/\Delta f_c]$, the set (1) is orthonormal. In the following we shall consider dot products and norms as above. Codes are modulated *on K* adjacent frequencies and spread on blocks of *M* successive pulses (time-frequency spreading), i.e. each block is expressed on the *KM* functions (1) given by $l \in \{0, ..., M\text{-}1\}$ and $k \in \{0, ..., K\text{-}1\}$.
With these definitions, the low-pass equivalent of the multicode signal at the transmitter is synthesized as:

$$s(t) = \sum_{n=-\infty}^{\infty} \sum_{(u,v)\in\mathcal{I}} b_{u,v}(n) s_{u,v}(t - nMT)\qquad(3)$$

where:

$$s_{u,v}(t) = \sum_{l=0}^{M-1} \sum_{k=0}^{K-1} [\mathbf{C}^{u,v}]_{l,k}\,\psi_{k,l}(t),\qquad(4)$$

and we denoted by $[\mathbf{X}]_{l,k}$ the element ($l$,$k$) of the matrix **X.**

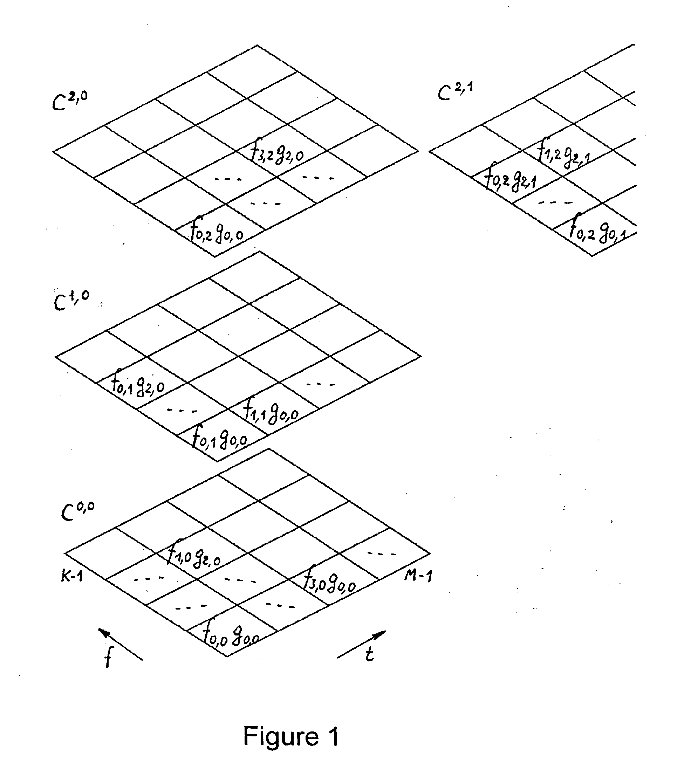

With reference to Figure 1, the matrix $\mathbf{C}^{u,v}$ represents a time-frequency spreading code identified by the couple of indexes ($u$,$v$). The system provides up to *KM* orthogonal codes and the transmission is multicode, i.e. a set of codes modulating different complex symbols is transmitted during the same signaling time *MT.* In other words, each matrix $\mathbf{C}^{u,v}$ transports one complex symbol belonging to a different data stream. In (3) $\mathcal{T}$ represents the set of indexes of codes selected for transmission. For the sake of simplicity we shall denote by $b_{u,v}(n)$ the data symbol modulating the code $\mathbf{C}^{u,v}$ at the *n*-th signaling interval. Each signaling interval comprises a block of $|\mathcal{T}|$ complex symbols. From (3) we observe that the SF of the signal is *KM/*$|\mathcal{T}|$ and varies according to the number of complex symbols (i.e. time-frequency codes) transmitted per signaling interval. On the other hand, transmission efficiency, defined as the number of bits transmitted per signal dimension, is proportional to $|\mathcal{T}|$/*KM*, where the proportionality factor depends on the number of bits carried per complex symbol. We want to be free to trade spreading for efficiency depending on the channel conditions, thus maximum transmission efficiency occurs maximizing $|\mathcal{T}|$/*K M*.

The discrete representation of *s(t)* in the *n*-th signaling interval in terms of coefficients of the orthonormal set (1), using that $\mathbf{C}^{u,v}$ = $\mathbf{f}_u\mathbf{g}_v{}^T$ (see Figure 1), can be cast in the form:

$$\mathbf{S}(n) = \sum_{(u,v)\in\mathcal{I}} b_{u,v}(n)\mathbf{C}^{u,v} = \mathbf{F}\mathbf{B}(n)\mathbf{G}^T,$$

where $\mathbf{S}(n)$ is a $K \times M$ coefficient matrix, $\mathbf{F} \equiv [\mathbf{f}_0, ..., \mathbf{f}_{K-1}]$ and $\mathbf{G} \equiv [\mathbf{g}_0, ..., \mathbf{g}_{M-1}]$ are the code matrices of sizes $K \times K$ and $M \times M$, respectively, and $\mathbf{B}(n)$ is a $K \times M$ (sparse) matrix whose $|\mathcal{T}|$ non-zero elements are the complex symbols $b_{u,v}(n)$. The orthonormality of the codes implies that $\mathbf{F} = \{f_{i,j}\}_{i,j}$ and $\mathbf{G} = \{g_{i,j}\}_{i,j}$ are unitary, i.e. $\mathbf{F}^H\mathbf{F} = \mathbf{F}^T\mathbf{F}^* = \mathbf{I}$ and $\mathbf{G}^H\mathbf{G} = \mathbf{G}^T\mathbf{G}^* = \mathbf{I}$.

### 4.2 Receiver principles

The multicode received signal from the *n*-th symbol block can be expressed in the form:

$$r(t) = \sum_{(u,v)\in\mathcal{I}} b_{u,v}(n) \sum_{l=0}^{M-1} \sum_{k=0}^{K-1} [\mathbf{C}^{u,v}]_{l,k}\ \psi_{k,l}(\cdot) * h(\cdot)\big|_{t-nMT-\tau_0}\ e^{j2\pi f_0 t}$$

$$+ w(t), \qquad\qquad\qquad\qquad\qquad\qquad\qquad (5)$$

where *h(t)* is the low-pass equivalent channel impulse response (CIR), the * operator denotes the convolution, $f_0$ is the frequency offset between up/down conversion chains of transmitter and receiver, $\tau_0$ is the first ray delay and *w*($t$) is an additive complex thermal noise white in the band of interest and of PSD 2$N_0$.

The processing principles of the loop for delay and frequency tracking and symbol detection are illustrated below, while details of the digital implementation are deferred to the next sections. The time-frequency tracking is joint, i.e. the DLL and FLL cooperate in order to locate the best frequency and delay estimate, provided that their starting points are *close enough* (in a sense that will be specified hereinafter) to the true values. The loop turns out to be a non-linear vector-state system whose state is the couple of the current estimates of frequency and delay.

The proposed receiver consists in three main digital sections: the first performs time and frequency corrections based on the current time-frequency estimate; the second performs channel estimation and equalization, the third consists in a symbol detector and in a time-frequency discriminator aimed to produce the update of the current state. The channel equalizer and DLL-FLL will not adapt their parameters at the same time but alternatively.

In order to fix the principle behind the definition of the code structure, we focus our analysis on frequency non-selective channels, relying, in case, on the channel equalization module. So eq. (5) can be expressed as:

$$r(t) \quad = h \sum_{(u,v)\in\mathcal{I}} b_{u,v}(n) \sum_{l=0}^{M-1} \sum_{k=0}^{K-1} [\mathbf{C}^{u,v}]_{l,k} \, \psi_{k,l}(t - nMT - \tau_0) e^{j2\pi f_0 t}$$

$$+ \, w(t),$$

where $h$ represents flat fading.

In accordance with the ML criterion, the time-frequency estimates maximize the log-likelihood function of the received signal. Assuming transmitted symbols statistically independent and (approximately) gaussian, owing to orthogonality of codes, the log-likelihood is expressed as the sum of the absolute squared values of the time-frequency cross-correlation between received signal and each transmitted code. We have thus:

$$\lambda(\Delta f, \Delta \tau) = \sum_{(u,v)\in\mathcal{I}} \mathrm{E}\left\{ |\chi_{u,v}(\Delta f, \Delta \tau)|^2 \right\}, \tag{6}$$

where $\tau$ and $f$ represent the current estimates of delay and frequency respectively, $\Delta\tau = \tau - \tau_0$ and $\Delta f = f - f_0$, $\mathcal{I}$ is the index set of transmitted codes and where:

$$\chi_{u,v}(\Delta f, \Delta \tau) = \int_{\Omega_n} r(t + \tau) s^{*}_{u,v}(t - nMT) e^{-j2\pi f t} dt. \tag{7}$$

In order to exploit orthogonality among base functions (1), we restrict the correlations to the multi-interval (strict optimality is traded off for a significant reduction in computational cost, time guard and orthogonality in the use of FFT at the receiver):

$$\Omega_n = \bigcup_{l = nM,\ldots,(n+1)M-1} \left[ lT, lT + \frac{1}{\Delta f_c} \right].$$

The maximization of eq. (2) can be pursued by a loop controlled by the gradient of the goal function. The loop equations can be cast as:

$$\Delta\tau(n + 1) = \Delta\tau(n) + \alpha \frac{\partial}{\partial \tau} \lambda \, (\Delta f(n), \Delta\tau(n)),$$

$$\Delta f(n+1) = \Delta f(n) + \beta \frac{\partial}{\partial f} \lambda \, (\Delta f(n), \, \Delta\tau(n)). \tag{8}$$

Assuming $|\Delta\tau| < \min \{T_{pr}, T_{po}\}$ and $|\Delta f| << \Delta f_c$ it is easy to verify that:

$$\int_{lT}^{lT + \frac{1}{\Delta f_c}} \psi_{k,l}(t + \Delta \tau) \, \psi^{*}_{p,q}(t) e^{-j2\pi \Delta f t} dt \approx$$

$$\approx \delta(p - k)\delta(q - l) e^{-j2\pi \Delta f T(l - \frac{M}{2})} e^{j2\pi \Delta f_c \Delta\tau(k - \frac{K}{2})}.$$

Under these conditions, by substituting the expressions of $r(t)$ and $s_{u,v}(t)$ in (6), we get:

$$|\chi_{u,v}(\Delta f, \Delta \tau)|^2 = |f^{H}_{u} R(n) g^{*}_{v}|^2,$$

where $[\mathbf{R}(n)]_{k,l}$ represents the projection of $r(t + \tau)e^{-j2\pi ft}$ on $\psi_{k,l}(t)$. By direct substitution, it is easy to verify that:

$$\mathbf{R}(n) \approx h \,\mathrm{diag}\left\{e^{-j2\pi(k-\frac{K}{2})\Delta\tau(n)\Delta f_c}\right\}_k \mathbf{S}(n) \,\mathrm{diag}\left\{e^{j2\pi(l-\frac{M}{2})\Delta f(n)T}\right\}_l +$$

$$+ \,\mathbf{W}(n),$$

where $\mathbf{W}(n)$ is a $K \times M$ noise matrix of i.i.d. complex gaussian random variables with zero mean and variance $2N_0$.

By simple passages, the partial derivative of the goal function can be rearranged as:

$$\frac{\partial}{\partial\tau}\lambda(\Delta f, \Delta\tau) = 2\Re\left\{\sum_{(u,v)\in\mathcal{I}} \dot{\mathbf{f}}_u^H \mathbf{R}\mathbf{g}_v^* \mathbf{g}_v^T \mathbf{R}^H \mathbf{f}_u\right\},$$

$$\frac{\partial}{\partial f}\lambda(\Delta f, \Delta\tau) = 2\Re\left\{\sum_{(u,v)\in\mathcal{I}} \mathbf{g}_v^T \mathbf{R}^H \mathbf{f}_u \mathbf{f}_u^H \mathbf{R}\dot{\mathbf{g}}_v^*\right\}, \tag{9}$$

where we defined:

$$\dot{\mathbf{f}}_u \triangleq \left[\dot{f}_{0,u}, \ldots, \dot{f}_{K-1,u}\right]^T = \mathrm{diag}\left\{j2\pi\Delta f_c\left(k - \frac{K}{2}\right)\right\}_k \mathbf{f}_u,$$

and

$$\dot{\mathbf{g}}_v \triangleq \left[\dot{g}_{0,v}, \ldots, \dot{g}_{M-1,v}\right]^T = \mathrm{diag}\left\{-j2\pi T\left(l - \frac{M}{2}\right)\right\}_l \mathbf{g}_v.$$

The ensemble-average operator in (6) has been omitted in (9) as a time average is implicitly performed by (8) (stochastic gradient approach).

It is worth to better analyze the right-hand side of (9) when all the $MK$ codes are transmitted. Under this specific condition, resorting to the sole orthogonality of $\mathbf{F}$ and $\mathbf{G}$ and, after some algebra, derivatives can be rearranged as:

$$\frac{\partial}{\partial\tau}\lambda(\Delta f, \Delta\tau) = 2\Re\left\{\mathrm{tr}\left\{\mathrm{diag}\left\{-j2\pi\Delta f_c\left(k - \frac{K}{2}\right)\right\}_k \mathbf{R}\mathbf{R}^H\right\}\right\},$$

$$\frac{\partial}{\partial f}\lambda(\Delta f, \Delta\tau) = 2\Re\left\{\mathrm{tr}\left\{\mathbf{R}^H\mathbf{R}\,\mathrm{diag}\left\{j2\pi T\left(l - \frac{M}{2}\right)\right\}_l\right\}\right\}, \tag{10}$$

where tr {.} denotes the trace of its argument.

Both $\mathbf{R}^H\mathbf{R}$ and $\mathbf{R}\mathbf{R}^H$ have real (non negative) eigenvalues, while the two diagonal matrices in (10) are purely imaginary. The trace of their products, as sum of imaginary eigenvalues, results imaginary as well, and the gradient identically null irrespectively of $(\Delta f, \Delta\tau)$ and $\mathbf{R}$.

As a first consequence, in order for the receiver to be able to estimate time and frequency from (9), at least one code must be left unused in the transmission. It is worth noticing that, even if one does not resort to a pilot code, the maximum channel efficiency results limited to $(MK - 1)/MK$.

A second implication of (10) concerns the gradient implementation. Let us denote by $\mathcal{I}^c$ the complement set of $\mathcal{I}$, i.e. the index set of all codes *not* used in the transmission. As the (10) is zero irrespectively of **R,** for any number of used codes, we have that:

$$2\Re\left\{\sum_{(u,v)\in\mathcal{I}}\dot{\mathbf{f}}_u^H\mathbf{R}\mathbf{g}_v^*\mathbf{g}_v^T\mathbf{R}^H\mathbf{f}_u\right\}=-2\Re\left\{\sum_{(u,v)\in\mathcal{I}^c}\dot{\mathbf{f}}_u^H\mathbf{R}\mathbf{g}_v^*\mathbf{g}_v^T\mathbf{R}^H\mathbf{f}_u\right\},$$

$$2\Re\left\{\sum_{(u,v)\in\mathcal{I}}\mathbf{g}_v^T\mathbf{R}^H\mathbf{f}_u\mathbf{f}_u^H\mathbf{R}\dot{\mathbf{g}}_v^*\right\}=-2\Re\left\{\sum_{(u,v)\in\mathcal{I}^c}\mathbf{g}_v^T\mathbf{R}^H\mathbf{f}_u\mathbf{f}_u^H\mathbf{R}\dot{\mathbf{g}}_v^*\right\}.$$

$$(11)$$

As a result, we find that (9) can be also expressed as the opposite of the gradient of the log-likelihood computed with respect to the codes *not transmitted.* As a consequence, the receiver can freely choose which side of (11) to implement. In particular, when $|\mathcal{I}| < MK/2$ the left-hand side is computationally more convenient, while, if $|\mathcal{I}| > MK/2$, the right-hand side will require less operations.

In order to implement each term of the sum in (9), we recognize that the quantities $\mathbf{f}^H\mathbf{R}\mathbf{g}^*_v$ represent $\hat{b}_{u,v}$, ML estimation for the data $b_{u,v}$. As vector $\dot{\mathbf{f}}_u$ is generated by $\{\mathbf{f}_k\}_{k\in U_u}$, we can express each term of (9) as:

$$\dot{\mathbf{f}}_u^H\mathbf{R}\mathbf{g}_v^*\mathbf{g}_v^T\mathbf{R}^H\mathbf{f}_u=\hat{b}_{u,v}^*\left(\sum_{k\in\mathcal{U}_u}\dot{\mathbf{f}}_u^H\mathbf{f}_k\hat{b}_{k,v}\right),$$

$$(12)$$

Dually for time codes, if vector $\dot{\mathbf{g}}_v$ is expressed on $\{\mathbf{g}_l\}_{l\in V_v}$, we have:

$$\mathbf{g}_v^T\mathbf{R}^H\mathbf{f}_u\mathbf{f}_u^H\mathbf{R}\dot{\mathbf{g}}_v^*=\hat{b}_{u,v}^*\left(\sum_{l\in\mathcal{V}_v}\mathbf{g}_v^T\dot{\mathbf{g}}_l^*\hat{b}_{u,l}\right).$$

$$(13)$$

The smaller are the set $U_u$ and $V_v$, the smaller is the computational load required to implement the addenda of (9) from estimated data. Herein we present a class of codes where $\dot{\mathbf{f}}_u$ and $\dot{\mathbf{g}}_v$ can be expressed on $1 + \log_2 K$ and $1 + \log_2 M$ vectors respectively. This property, together with (11), lessens substantially the computational load required to generate the loop control signal in the proposed architecture.

### 4.3 A fast transform for time-frequency coding

**F** and **G** have to fulfill the same requirement, i.e. $\dot{\mathbf{f}}_u$ and $\dot{\mathbf{g}}_v$ depend only on a small number of codes different from $\mathbf{f}_u$ and $\mathbf{g}_v$ respectively. In the following we shall focus only on the definition of **F,** using the same class of codes both in time and frequency. Moreover, we still require a structure to **F** such that matrix-vector products be computed with a low computational cost. Herein, we introduce a class of orthonormal codes generable by low complexity transforms (i.e. $O(K \log_2 K)$) and such that any $\dot{\mathbf{f}}_u$ is linearly dependent on only $\log_2 K$ vectors different from $\mathbf{f}_u$.

### *4.3.1 A Generalized Fast Hadamard Transform*

Hadamard matrices are symmetric and, if suitably scaled, unitary. Due to their particular structure, it is possible to define a fast Hadamard transform (FHT) able to perform matrix-vector products at the cost *of $K \log_2 K$* additions (see e.g. Chen Anshi, Li Di, *A research on fast Hadamard transform (FHT) digital systems,* Computer, Communication, Control and Power Engineering,1993. TENCON '93, pgs. 541-545, October 1993).

By generalizing Hadamard codes, we define a new class of orthogonal matrixes provided of fast orthonormal transforms with the same order of computational complexity of FHT. The degrees of freedom resulting in code definition can be used in order to discriminate different transmissions in the same region or for other desired applications.

Let $\mathbf{H}_m = \{h_{l,u}^m\}_{l,u}$ denote a $K \times K$ orthonormal matrix of generalized codes, with $K = 2^m$, and let $\mathbf{h}_i^m$ be its $i$-th column.

The construction of $\mathbf{H}_m$ for any $K$ (power of 2) is defined by following recursive relations:

$$
\mathbf{h}_i^m \triangleq
\begin{cases}
\begin{bmatrix} \alpha_m \mathbf{h}_i^{m-1} \\ \gamma_m \mathbf{h}_i^{m-1} \end{bmatrix}, & \text{if } 0 \le i \le 2^{m-1} - 1; \\[4mm]
\begin{bmatrix} \beta_m \mathbf{h}_{i-2^{m-1}}^{m-1} \\ -\delta_m \mathbf{h}_{i-2^{m-1}}^{m-1} \end{bmatrix}, & \text{if } 2^{m-1} \le i \le 2^m - 1;
\end{cases}
\tag{14}
$$

with the additional clause

$$
\mathbf{h}_0^0 \triangleq 1.
$$

It can be shown that eq. (14) implies:

$$
h_{l,u}^m = \prod_{i=0}^{m-1} \eta_i(l, u)
$$

where

$$
\eta_i(l, u) =
\begin{cases}
\alpha_{i+1}, & \text{if } u_i = 0 \text{ and } l_i = 0; \\[2mm]
\gamma_{i+1}, & \text{if } u_i = 0 \text{ and } l_i = 1; \\[2mm]
\beta_{i+1}, & \text{if } u_i = 1 \text{ and } l_i = 0; \\[2mm]
-\delta_{i+1}, & \text{if } u_i = 1 \text{ and } l_i = 1;
\end{cases}
$$

and where $\{u_i\}$ and $\{l_i\}$ represent the digits of the binary representation of $u$ and $l$, i.e. we have

$$
u = \sum_{i=0}^{m-1} u_i 2^i
$$

and

$$
l = \sum_{i=0}^{m-1} l_i 2^i.
$$

Definition (14) also implies that $\mathbf{H}_m$ is orthonormal when, for any $i \in \{1,...,m\}$, we have:

$$
\begin{aligned}
|\alpha_i|^2 + |\gamma_i|^2 &= 1, \\
|\beta_i|^2 + |\delta_i|^2 &= 1, \\
\alpha_i^* \beta_i - \gamma_i^* \delta_i &= 0.
\end{aligned}
\tag{15}
$$

In accordance with (14), definition of $\mathbf{H}_m$ requires four complex parameters at each step of recursion, but because of (15), only four degrees of freedom remain available.

Let $\mathbf{y}^m = \mathbf{H}_m\mathbf{x}^m$ be the direct transform of $\mathbf{x}^m = [\mathbf{x}_0^{m-1\ T}, \mathbf{x}_1^{m-1\ T}]^T$, and $\mathbf{y}_i^{m-1} = \mathbf{H}_{m-1}\mathbf{x}_i^{m-1}$ the direct transform of $\mathbf{x}_i^{m-1}$.

By (14) we obtain the following recursive equation:

$$\mathbf{y}^m \doteq \begin{bmatrix} \alpha_m \mathbf{y}_0^{m-1} \\ \gamma_m \mathbf{y}_0^{m-1} \end{bmatrix} + \begin{bmatrix} \beta_m \mathbf{y}_1^{m-1} \\ -\delta_m \mathbf{y}_1^{m-1} \end{bmatrix}. \tag{16}$$

Equation (16) is the elementary step of the generalized Fast Hadamard Transform. We observe that the computation of a $K = 2^m$ points transform is broken in the computation of two transforms on $K/2 = 2^{m-1}$ points. If we call $S_m$ the number of sums required for a $K$ transform, by (16) we get $S_m = 2^m + 2S_{m-1}$, which after $m$ iterations leads to $S_m = 2^m m = K \log_2 K$. Similarly, if $P_m$ the number of (complex) products, as $P_m = 2 \cdot 2^m + 2 P_{m-1}$, we have $P_m = 2K \log_2 K$. As each step of recursion introduces four degree of freedom in the definition of the transform, the total number of parameters that specifies $\mathbf{H}_m$ results $4 \log_2 K$.

It is easy to extend those results to the inverse transform $x^m = \mathbf{H}_m^H \mathbf{y}^m$, using the recursive equation:

$$\mathbf{x}^m = \begin{bmatrix} \alpha_m^* \mathbf{x}_0^{m-1} \\ \beta_m^* \mathbf{x}_0^{m-1} \end{bmatrix} + \begin{bmatrix} \gamma_m^* \mathbf{x}_1^{m-1} \\ -\delta_m^* \mathbf{x}_1^{m-1} \end{bmatrix},$$

where $\mathbf{x}_i^{m-1} = \mathbf{H}_{m-1}^H \mathbf{y}_i^{m-1}$ and $\mathbf{y}^m = [\mathbf{y}_0^{m-1\ T}, \mathbf{y}_1^{m-1\ T}]^T$.

It is worth to focus on two special cases. When

$$\alpha_m = \beta_m = \gamma_m = \delta_m = \frac{1}{\sqrt{2}},$$

the (14) defines the normalized Hadamard code, while the (16) returns the elementary step of the (scaled) fast Hadamard transform. As scaled FHT does not require complex products but only real sums and scaling, another non-trivial case worthy of attention is when

$$\alpha_m = \beta_m = \frac{1}{\sqrt{2}}$$

and

$$\gamma_m = \delta_m = \frac{j}{\sqrt{2}}.$$

Exploiting the fact that the product for $\pm j$ implies essentially only a swap between real and imaginary parts of data, the transform requires exactly the same computational load of conventional (scaled) FHT.

*4.3.2 A Derivative Expression*

It is easy to prove that

$$\dot{\mathbf{h}}_u^m \triangleq \mathrm{diag}\left\{k - \tfrac{K}{2}\right\}_k \mathbf{h}_u^m$$

depends only on a small number of $\mathbf{h}_v^m$ $v \neq u$. In particular, the number of codes, different from $\mathbf{h}_u^m$ and linearly dependent on $\dot{\mathbf{h}}_u^m$, turns out to be exactly $m = \log_2 K$. A simple proof, herein omitted for brevity, leads to the following expression for $\dot{\mathbf{h}}_u^m$:

$$
\dot{\mathbf{h}}_u^m = \sum_{i=0}^{m-1} 2^{i-1} \hat{u}_i \left( |\beta_{i+1}|^2 - |\delta_{i+1}|^2 \right) \mathbf{h}_u^m +
$$
$$
+ \sum_{i=0}^{m-1} 2^i \theta_{i+1}^*(\bar{u}_i) \theta_{i+1}(u_i) \mathbf{h}_{u + \hat{u}_i 2^i}^m - \frac{1}{2} \mathbf{h}_u^m, \tag{19}
$$

where

$$
\hat{u}_i \triangleq 1 - 2u_i, \quad \bar{u}_i \triangleq 1 - u_i,
$$

and we defined

$$
\theta_i(u) \triangleq \begin{cases} \gamma_i, & \text{if } u = 0; \\ -\delta_i, & \text{if } u = 1. \end{cases} \tag{20}
$$

Property (19) provides a first order expression for the amount of linear dependence among different frequency-codes subject to timing errors, and, dually, the amount of linear dependence among different time-codes subject to frequency errors.

### 4.4 Loop convergence analysis

This section provides a simplified analysis of the tracking loop for the outlined receiver and criteria for the choice of their feedback parameters. We assume that the channel effects are completely cancelled by the equalization module. With this assumptions the system is equivalent to the non-linear loop in Figure 4, where the feedback LPF's have been omitted in order to lessen the analysis.

In case of frequency selective fading, the block of received signal prior to the channel equalizer, when $|\Delta\tau| <$ min $\{T_{pr}, T_{po}\}$ and $|\Delta f| << \Delta f_c$, can be expressed as:

$$
\mathbf{R}(n) \approx \operatorname{diag}\left\{ h_k e^{-j2\pi(k - \frac{K}{2})\Delta\tau(n)\Delta f_c} \right\}_k \mathbf{S}(n) \operatorname{diag}\left\{ e^{j2\pi(l - \frac{M}{2})\Delta f(n)T} \right\}_l
$$
$$
+ \mathbf{W}(n), \tag{21}
$$

where $h_k$ is the projection of $h(t)$ on $\psi_{k,0}(t)$ and $\mathbf{W}(n)$ is a $K \times M$ noise matrix of i.i.d. complex gaussian random variables with zero mean and variance $2N_0$. We note that $\mathbf{h} = [h_0, \dots, h_{K-1}]^T$ is the channel frequency response (CFR) obtained as normalized discrete Fourier transform (DFT) on $K$ bins of the CIR $\mathbf{h}_L = [h_0^L, \dots, h_{K-1}^L, 0, \dots, 0]^T$ with $h_n^L = h(t)/\sqrt{K\Delta f_c}|_{t = n/(K\Delta f_c)}$, $n \in \{0, \dots, L - 1\}$ and $L < K$.

In case of perfect channel estimation, the ORC module (Orthogonality Restoring Combiner) performs the processing:

$$\mathbf{P}(n) \stackrel{\triangle}{=} \operatorname{diag}\{1/h_k\}\,\mathbf{R}(n),$$

where:

$$\mathbf{P}(n) \approx \quad \operatorname{diag}\left\{e^{-j2\pi(k-\frac{K}{2})\Delta\tau(n)\Delta f_c}\right\}_k \mathbf{S}(n) \operatorname{diag}\left\{e^{j2\pi(l-\frac{M}{2})\Delta f(n)T}\right\}_l$$

$$+ \mathbf{Z}(n), \tag{22}$$

and $\mathbf{Z}(n) = \{z_{k,l}(n)\}_{k,l}$ results a $K \times M$ noise matrix of i.i.d. complex gaussian random variables with zero mean and autocorrelation E $\{z_{k,l}(n)z^*_{u,v}(n)\} = 2N_0/|h_k|^2\delta(u - k)\delta(l - v)$.

We can now express the non-linear loop of the receiver in terms of the discrete signal quantities obtained by the channel equalizer.

By posing $\mathbf{x}(n) = [\Delta\tau(n), \Delta f(n)]^T$, the (8) can be expressed in vectorial form as:

$$x(n+1) = x(n) + D\Phi(x(n)) \tag{23}$$

where we defined

$$\mathbf{D} \stackrel{\triangle}{=} \operatorname{diag}\{\alpha,\beta\}$$

and where $\Phi(\mathbf{x})$ is the gradient (9). This latter, expressed in terms of the equalized signal (22), becomes:

$$\Phi(\mathbf{x}) = \sum_{(u,v)\in\mathcal{I}} 2\Re\left[\begin{array}{c} \dot{\mathbf{f}}_u^H \mathbf{P}\mathbf{g}_v^* \mathbf{g}_v^T \mathbf{P}^H \mathbf{f}_u \\ \mathbf{g}_v^T \mathbf{P}^H \mathbf{f}_u \mathbf{f}_u^H \mathbf{P}\dot{\mathbf{g}}_v^* \end{array}\right]. \tag{24}$$

Denoting the useful signal in (22) by:

$$\mathbf{V} \stackrel{\triangle}{=} \operatorname{diag}\left\{e^{-j2\pi\left(k-\frac{K}{2}\right)\Delta\tau\Delta f_c}\right\}_k \mathbf{S} \operatorname{diag}\left\{e^{j2\pi\left(l-\frac{M}{2}\right)\Delta fT}\right\}_l,$$

we can split $\Phi(\mathbf{x})$ into a term accounting data and a term comprising both signal and noise. By direct substitution, we find:

$$\Phi(\mathbf{x}) = \sum_{(u,v)\in\mathcal{I}} 2\Re\left[\begin{array}{c} \dot{\mathbf{f}}_u^H \mathbf{V}\mathbf{g}_v^* \mathbf{g}_v^T \mathbf{V}^H \mathbf{f}_u \\ \mathbf{g}_v^T \mathbf{V}^H \mathbf{f}_u \mathbf{f}_u^H \mathbf{V}\dot{\mathbf{g}}_v^* \end{array}\right] + \mathbf{u}, \tag{25}$$

where $\mathbf{u}$ can be expressed as:

$$\mathbf{u} = 4 \sum_{(u,v)\in\mathcal{I}} \Re\left[\begin{array}{c} \dot{\mathbf{f}}_u^H \mathcal{H}\left[\mathbf{Z}\mathbf{g}_v^* \mathbf{g}_v^T \mathbf{V}^H\right]\mathbf{f}_u \\ \mathbf{g}_v^T \mathcal{H}\left[\mathbf{Z}^H \mathbf{f}_u \mathbf{f}_u^H \mathbf{V}\right]\dot{\mathbf{g}}_v^* \end{array}\right] + 2 \sum_{(u,v)\in\mathcal{I}} \Re\left[\begin{array}{c} \dot{\mathbf{f}}_u^H \mathbf{Z}\mathbf{g}_v^* \mathbf{g}_v^T \mathbf{Z}^H \mathbf{f}_u \\ \mathbf{g}_v^T \mathbf{Z}^H \mathbf{f}_u \mathbf{f}_u^H \mathbf{Z}\dot{\mathbf{g}}_v^* \end{array}\right]. \tag{26}$$

With respect to the signal part of the gradient, resorting to the Maclaurin expansion of $\mathbf{V}$ for small values of time-frequency errors, it can be arranged as:

$$\mathbf{A}\mathbf{x} + \begin{bmatrix} a_1 \\ a_2 \end{bmatrix} \Delta\tau\Delta f + \begin{bmatrix} \mathrm{o}\left(\Delta\tau\right) \\ \mathrm{o}\left(\Delta\tau\right) \end{bmatrix} + \begin{bmatrix} \mathrm{o}\left(\Delta f\right) \\ \mathrm{o}\left(\Delta f\right) \end{bmatrix}, \qquad (27)$$

where

$$
\begin{aligned}
a_{1,1} &= 2\sum_{(u,v)\in\mathcal{I}} \left|\dot{\mathbf{f}}_u^H \mathbf{S}\mathbf{g}_v^*\right|^2 + \Re\left\{\ddot{\mathbf{f}}_u^H \mathbf{S}\mathbf{g}_v^* b_{u,v}^*\right\}, \\
a_{1,2} &= 4\sum_{(u,v)\in\mathcal{I}} \Re\left\{\dot{\mathbf{f}}_u^H \mathbf{S}\mathcal{H}\left[\mathbf{g}_v^* \dot{\mathbf{g}}_v^T\right]\mathbf{S}^H \mathbf{f}_u\right\}, \\
a_{2,1} &= 4\sum_{(u,v)\in\mathcal{I}} \Re\left\{\mathbf{g}_v^T \mathbf{S}^H \mathcal{H}\left[\dot{\mathbf{f}}_u \mathbf{f}_u^H\right]\mathbf{S}\dot{\mathbf{g}}_v^*\right\}, \\
a_{2,2} &= 2\sum_{(u,v)\in\mathcal{I}} \left|\mathbf{f}_u^H \mathbf{S}\dot{\mathbf{g}}_v^*\right|^2 + \Re\left\{\mathbf{f}_u^H \mathbf{S}\ddot{\mathbf{g}}_v^* b_{u,v}^*\right\}, \\
a_1 &= 4\sum_{(u,v)\in\mathcal{I}} \Re\left\{\ddot{\mathbf{f}}_u^H \mathbf{S}\mathcal{H}\left[\dot{\mathbf{g}}_v^* \mathbf{g}_v^T\right]\mathbf{S}^H \mathbf{f}_u\right\} + 4\dot{\mathbf{f}}_u^H \mathbf{S}\mathcal{H}\left[\mathbf{g}_v^* \mathbf{g}_v^T\right]\mathbf{S}^H \dot{\mathbf{f}}_u, \\
a_2 &= 4\sum_{(u,v)\in\mathcal{I}} \Re\left\{\ddot{\mathbf{g}}_v^T \mathbf{S}^H \mathcal{H}\left[\dot{\mathbf{f}}_u \mathbf{f}_u^H\right]\mathbf{S}\mathbf{g}_v^*\right\} + 4\dot{\mathbf{g}}_v^T \mathbf{S}^H \mathcal{H}\left[\dot{\mathbf{f}}_u \mathbf{f}_u^H\right]\mathbf{S}\dot{\mathbf{g}}_v^*,
\end{aligned}
\qquad (28)
$$

and where

$$\ddot{\mathbf{f}}_u \triangleq \mathrm{diag}\left\{j2\pi\Delta f_c(k - \tfrac{K}{2})\right\}_k^2 \mathbf{f}_u \quad \text{and} \quad \ddot{\mathbf{g}}_v \triangleq \mathrm{diag}\left\{-j2\pi T(l - \tfrac{M}{2})\right\}_l^2 \mathbf{g}_v.$$

We note that $a_{2,1} = a_{1,2}$ (as mixed partial derivatives of the goal function).

With respect to the noise term, $\{\mathbf{u}(n)\}_n$ turns out to be almost a sequence of i.i.d. random variables. It can be shown that $\mathrm{E}\{\mathbf{u}(n)\} = 0$ and $\mathrm{E}\{u_1 u_2\} = 0$. When $\mathcal{I} = \kappa \times \mathcal{L}$, the variances of its components can be expressed in accordance with the closed form:

$$
\begin{aligned}
\overline{u_1^2} \approx\; & -8\,N_0 \sum_{(u,v)\in\mathcal{I}} \Re\left\{\dot{\mathbf{f}}_u^H \mathrm{diag}\left\{1/\left|h_k\right|^2\right\}\mathbf{P}_{\mathcal{K}}\dot{\mathbf{f}}_u\right\}\overline{\left|b_{u,v}\right|^2} + \\
& +4\,N_0 \sum_{(u,v)\in\mathcal{I}} \dot{\mathbf{f}}_u^H \mathrm{diag}\left\{1/\left|h_k\right|^2\right\}\dot{\mathbf{f}}_u \overline{\left|b_{u,v}\right|^2} + \\
& +4\,N_0 \sum_{(u,v)\in\mathcal{I}} \dot{\mathbf{f}}_u^H \mathbf{P}_{\mathcal{K}}\mathrm{diag}\left\{1/\left|h_k\right|^2\right\}\mathbf{P}_{\mathcal{K}}\dot{\mathbf{f}}_u \overline{\left|b_{u,v}\right|^2},
\end{aligned}
\qquad (29)
$$

$$\overline{u_2^2} \approx 4\,N_0 \sum_{(u,v)\in\mathcal{I}} \mathbf{f}_u^H \mathrm{diag}\left\{1/\left|h_k\right|^2\right\}\mathbf{f}_u \overline{\left|b_{u,v}\right|^2}\left\|\mathbf{P}_{\mathcal{L}}^{\perp}\dot{\mathbf{g}}_v\right\|^2, \qquad (30)$$

where, for the sake of simplicity, we neglected the second term of (26), as dominated by the first for high SNR ratio and we assumed $\mathbf{V} \approx \mathbf{S}$. Moreover, we posed:

$$\mathbf{P}_{\mathcal{K}} \stackrel{\triangle}{=} \sum_{k \in \mathcal{K}} \mathbf{f}_k \mathbf{f}_k^H, \quad \mathbf{P}_{\mathcal{K}}^{\perp} \stackrel{\triangle}{=} \mathbf{I}_K - \mathbf{P}_{\mathcal{K}}$$

$$\mathbf{P}_{\mathcal{L}} \stackrel{\triangle}{=} \sum_{l \in \mathcal{L}} \mathbf{g}_l \mathbf{g}_l^H, \quad \mathbf{P}_{\mathcal{L}}^{\perp} \stackrel{\triangle}{=} \mathbf{I}_M - \mathbf{P}_{\mathcal{L}}$$

where $\mathbf{P}_C$ is the orthogonal projector on the subspace spanned by vectors whose indexes are in $C$, $\mathbf{P}_C^{\perp}$ is the orthogonal projector on the complementary subspace, and $\mathbf{I}_N$ is the $N \times N$ identity matrix.

During convergence of the non-linear loop, in a neighborhood of the true time and frequency, equation (23) can be locally approximated by disregarding terms o($\Delta\tau$) + o($\Delta f$). In this case, we can evaluate the system performance by analyzing the equation:

$$\mathbf{x}(n + 1) = \mathbf{x}(n) + \mathbf{D}\mathbf{A}(n)\mathbf{x}(n) + \mathbf{D} \left[ \begin{array}{c} a_1 \\ a_2 \end{array} \right] \Delta\tau(n)\Delta f(n) + \mathbf{D}\mathbf{u}(n). \tag{31}$$

We note that linearizing the gradient with respect to $\Delta f$ and $\Delta\tau$ separately does not lead, in general, to linear equations because of the presence of the quadratic terms in $[a_1, a_2]^T$.

First, we focus on conditions to have estimators asymptotically unbiased.

By averaging eq. (31), we get:

$$\text{E} \{x(n + 1)\} = \text{E} \{x(n)\} + \text{D diag} \{\text{E} \{a_{1,1}\}, \text{E} \{a_{2,2}\}\} \text{ E} \{x(n)\}, \tag{32}$$

where we used the fact that E $\{a_{1,2}\}$ = E $\{a_{2,1}\}$ = E $\{a_1\}$ = E $\{a_2\}$ = 0 because of data symmetry and code structure. (Note that $\mathbf{x}(n)$ and (28) are statistically independent, as the former depends on past data, the latter on the current data.) By the same algebra, we have that:

$$\overline{\Delta\tau} \;\; = \;\; \lim_{n \to \infty} \text{E} \{\Delta\tau(n)\} \;\; = \;\; \lim_{n \to \infty} \text{E} \{\Delta\tau(0)\} \left(1 + \alpha \, \text{E} \{a_{1,1}\}\right)^n = 0,$$

$$\overline{\Delta f} \;\; = \;\; \lim_{n \to \infty} \text{E} \{\Delta f(n)\} \;\; = \;\; \lim_{n \to \infty} \text{E} \{\Delta f(0)\} \left(1 + \beta \, \text{E} \{a_{2,2}\}\right)^n = 0, \tag{33}$$

when conditions:

$$0 < \alpha < -\frac{2}{\text{E}\{a_{1,1}\}}, \;\; 0 < \beta < -\frac{2}{\text{E}\{a_{2,2}\}}, \tag{34}$$

are fulfilled, where

$$\text{E} \{a_{1,1}\} \;\; = \;\; -2 \sum_{(u,v) \in \mathcal{I}} \left\| \mathbf{P}_{\mathcal{K}}^{\perp} \dot{\mathbf{f}}_u \right\|^2 \overline{|b_{u,v}|^2},$$

$$\text{E} \{a_{2,2}\} \;\; = \;\; -2 \sum_{(u,v) \in \mathcal{I}} \left\| \mathbf{P}_{\mathcal{L}}^{\perp} \dot{\mathbf{g}}_v \right\|^2 \overline{|b_{u,v}|^2}. \tag{35}$$

Hence, conditions (34) guarantee asymptotically unbiased estimators.

Second, we focus on the computation of the asymptotic variance of our estimators. We can proceed by squaring equations (31) and averaging. Using that E $\{a_{1,1}\, a_{1,2}\}$ = E $\{a_{2,2}\, a_{2,1}\}$ = 0 and that E $\{a_p\, u_p\}$ = E $\{a_{p,q}\, u_p\}$ = 0 because of data symmetry and code structure, we get:

$$
\begin{aligned}
E\left\{\Delta\tau^2(n+1)\right\} &= \left(\alpha^2 E\left\{a_{1,1}^2\right\} + 2\alpha E\left\{a_{1,1}\right\} + 1\right) E\left\{\Delta\tau^2(n)\right\} + \alpha^2\overline{u_1^2} + \\
&\quad +2\alpha\, E\left\{a_{1,1}a_1\right\} E\left\{\Delta\tau^2(n)\Delta f(n)\right\} + \\
&\quad +2\alpha\, E\left\{a_{1,2}a_1\right\} E\left\{\Delta\tau(n)\Delta f^2(n)\right\} + \\
&\quad +E\left\{a_1^2\right\} E\left\{\Delta\tau^2(n)\Delta f^2(n)\right\} + \alpha^2 E\left\{a_{1,2}^2\right\} E\left\{\Delta f^2(n)\right\},
\end{aligned}
$$

$$
\begin{aligned}
E\left\{\Delta f^2(n+1)\right\} &= \left(\beta^2 E\left\{a_{2,2}^2\right\} + 2\beta E\left\{a_{2,2}\right\} + 1\right) E\left\{\Delta f^2(n)\right\} + \beta^2\overline{u_2^2} + \\
&\quad +2\beta\, E\left\{a_{2,2}a_2\right\} E\left\{\Delta\tau(n)\Delta f^2(n)\right\} + \\
&\quad +2\beta\, E\left\{a_{2,1}a_2\right\} E\left\{\Delta\tau^2(n)\Delta f(n)\right\} + \\
&\quad +E\left\{a_2^2\right\} E\left\{\Delta\tau^2(n)\Delta f^2(n)\right\} + \beta^2 E\left\{a_{2,1}^2\right\} E\left\{\Delta\tau^2(n)\right\}. \qquad (36)
\end{aligned}
$$

As appears from (31) (and consequently from (36)), in the general case the transfer equations result coupled and, thus, time and frequency estimators dependent. This implies that errors in time affect frequency estimation and vice-versa. Actually, condition $\mathcal{I} = K \times \mathcal{L}$ is sufficient to guarantee uncoupling and independence of the estimators, in fact, we have that $\mathcal{I} = K \times \mathcal{L}$ implies $a_{1,2} = a_1 = a_2 = 0$ deterministically. Under this assumption, the sums

$$
\sum_{(u,v)\in\mathcal{I}} (\cdot)
$$

in the expressions of $a_{1,2}$ and $a_1$ in (28) can be split into

$$
\sum_{u\in\mathcal{K}}\sum_{v\in\mathcal{L}}(\cdot).
$$

It is easy to recognize that both $a_{1,2}$ and $a_1$ share the term:

$$
\sum_{v\in\mathcal{L}} \mathbf{S}\mathcal{H}\left[\mathbf{g}_v^*\dot{\mathbf{g}}_v^T\right]\mathbf{S}^H = \mathcal{H}\left[\mathbf{S}\sum_{v\in\mathcal{L}}\mathbf{g}_v^*\dot{\mathbf{g}}_v^T\mathbf{S}^H\right]. \qquad (37)
$$

Recalling that

$$
\mathbf{S} = \sum_{(k,l)\in\mathcal{I}} b_{k,l}\mathbf{f}_k\mathbf{g}_l^T,
$$

we can arrange the argument of the right-hand side as:

$$
\mathbf{S}\sum_{v\in\mathcal{L}}\mathbf{g}_v^*\dot{\mathbf{g}}_v^T\mathbf{S}^H = j\sum_{(u,k)\in\mathcal{K}^2}\left(\sum_{(v,l)\in\mathcal{L}^2}\mathbf{g}_v^T\,\mathrm{diag}\left\{2\pi T\left(q-\frac{M}{2}\right)\right\}_q\mathbf{g}_l^*b_{k,v}b_{u,l}^*\right)\mathbf{f}_k\mathbf{f}_u^H,
$$

that, by trivial index renaming, results opposite to its hermitian. Thus, equation (37) results identically null, as hermitian part of an anti-hermitian matrix. Dual passages hold for $a_2$, where

$$\sum_{(u,v)\in\mathcal{I}} (\cdot)$$

can be arranged as

$$\sum_{v\in\mathcal{L}}\sum_{u\in\mathcal{K}}(\cdot).$$

Now, by simple algebra, when $n \to \infty$ in (36), it is easy to see that, when:

$$0 < \alpha < -2\frac{\mathrm{E}\{a_{1,1}\}}{\mathrm{E}\{a_{1,1}^2\}} = 2\frac{|\mathrm{E}\{a_{1,1}\}|}{\mathrm{E}\{a_{1,1}^2\}},$$

$$0 < \beta < -2\frac{\mathrm{E}\{a_{2,2}\}}{\mathrm{E}\{a_{2,2}^2\}} = 2\frac{|\mathrm{E}\{a_{2,2}\}|}{\mathrm{E}\{a_{2,2}^2\}}, \qquad (38)$$

the asymptotic estimator variances result:

$$\overline{\Delta\tau^2} = \frac{\dfrac{\overline{u_1^2}}{|\mathrm{E}\{a_{1,1}\}|}}{\dfrac{2}{\alpha} - \dfrac{\mathrm{E}\{a_{1,1}^2\}}{|\mathrm{E}\{a_{1,1}\}|}}, \qquad \overline{\Delta f^2} = \frac{\dfrac{\overline{u_2^2}}{|\mathrm{E}\{a_{2,2}\}|}}{\dfrac{2}{\beta} - \dfrac{\mathrm{E}\{a_{2,2}^2\}}{|\mathrm{E}\{a_{2,2}\}|}}. \qquad (39)$$

As expected, comparing (33) with (39), we find that the asymptotic variance of estimators and speed of convergence are inversely proportional. In fact, high values of $\alpha$ and $\beta$ imply fast convergence of (33) but also high asymptotic variances, and vice versa.

We observe that conditions (38) are in general stricter than (34). Interestingly, we note by (39) that the best asymptotic performance is achieved when $a_{i,i}$ results almost deterministic, e.g. when a sole code is employed with PSK data. After squaring and averaging the (28), it can be proved that:

$$
\begin{aligned}
\mathrm{E}\{a_{11}^2\} \;=\; & 4\sum_{u\in\mathcal{K}}\left\|\mathbf{P}_{\mathcal{K}}^{\perp}\dot{\mathbf{f}}_u\right\|^4 \sum_{v\in\mathcal{L}}\overline{|b_{u,v}|^4} - 8\sum_{u\in\mathcal{K}}\left\|\mathbf{P}_{\mathcal{K}}^{\perp}\dot{\mathbf{f}}_u\right\|^4 \sum_{v\in\mathcal{L}}\overline{|b_{u,v}|^2}^2 + \\
& + 4\sum_{(u,k)\in\mathcal{K}^2}\left|\dot{\mathbf{f}}_u^H\mathbf{P}_{\mathcal{K}}^{\perp}\dot{\mathbf{f}}_k\right|^2 \sum_{v\in\mathcal{L}}\overline{|b_{u,v}|^2}\,\overline{|b_{k,v}|^2} + \\
& + 4\left(\sum_{u\in\mathcal{K}}\left\|\mathbf{P}_{\mathcal{K}}^{\perp}\dot{\mathbf{f}}_u\right\|^2 \sum_{v\in\mathcal{L}}\overline{|b_{u,v}|^2}\right)^2,
\end{aligned}
\qquad (40)
$$

$$E\left\{a_{22}^2\right\} = 4\sum_{v\in\mathcal{L}}\left\|\mathbf{P}_\mathcal{L}^\perp\dot{\mathbf{g}}_v\right\|^4\sum_{u\in\mathcal{K}}\overline{|b_{u,v}|^4} - 8\sum_{v\in\mathcal{L}}\left\|\mathbf{P}_\mathcal{L}^\perp\dot{\mathbf{g}}_v\right\|^4\sum_{u\in\mathcal{K}}\overline{|b_{u,v}|^2}^2 +$$
$$+ 4\sum_{(v,l)\in\mathcal{L}^2}\left|\dot{\mathbf{g}}_v^T\mathbf{P}_\mathcal{L}^\perp\dot{\mathbf{g}}_l^*\right|^2\sum_{u\in\mathcal{K}}\overline{|b_{u,v}|^2\,|b_{u,v}|^2} +$$
$$+ 4\left(\sum_{v\in\mathcal{L}}\left\|\mathbf{P}_\mathcal{L}^\perp\dot{\mathbf{g}}_v\right\|^2\sum_{u\in\mathcal{K}}\overline{|b_{u,v}|^2}\right)^2.$$

$$(41)$$

Both asymptotic performance and bounds on $\alpha$ and $\beta$ depend on the ratio of (40) and (41) with (35). Focusing on time codes by analyzing (41), we note that, for a given number of vectors, a lower mean squared value is achieved by a code set $_\mathcal{L}$ which maximize energy of the projection on its own span of each of its *derivatives*.

As a matter of fact, given that vector $v_0$ is transmitted, it is convenient to choose as second code the vector $v_1$ that maximize $|\dot{\mathbf{g}}_{v0}^H\mathbf{g}_{v1}|^2$, as third the vector $v_2$ that maximize $|\dot{\mathbf{g}}_{v0}^H\mathbf{g}_{v2}|^2 + |\dot{\mathbf{g}}_{v1}^H\mathbf{g}_{v2}|^2$, as forth the vector $v_3$ that maximize $|\dot{\mathbf{g}}_{v0}^H\mathbf{g}_{v3}|^2 + |\dot{\mathbf{g}}_{v1}^H\mathbf{g}_{v3}|^2 + |\dot{\mathbf{g}}_{v1}^H\mathbf{g}_{v3}^2|$, and so on. Similar considerations apply to the choice of frequency codes.

In case of AWGN channel, assuming $h_k = h$ for any $k$, by substituting (40), (41), (35), (29) and (30) in (39), it is obtained:

$$\overline{\Delta\tau^2} = \frac{N_0}{|h|^2}\left[\frac{1}{\alpha} - \frac{\sum_{u\in\mathcal{K}}\left\|\mathbf{P}_\mathcal{K}^\perp\dot{\mathbf{f}}_u\right\|^4\sum_{v\in\mathcal{L}}\overline{|b_{u,v}|^4}}{\sum_{u\in\mathcal{K}}\left\|\mathbf{P}_\mathcal{K}^\perp\dot{\mathbf{f}}_u\right\|^2\sum_{v\in\mathcal{L}}\overline{|b_{u,v}|^2}} + 2\frac{\sum_{u\in\mathcal{K}}\left\|\mathbf{P}_\mathcal{K}^\perp\dot{\mathbf{f}}_u\right\|^4\sum_{v\in\mathcal{L}}\overline{|b_{u,v}|^2}^2}{\sum_{u\in\mathcal{K}}\left\|\mathbf{P}_\mathcal{K}^\perp\dot{\mathbf{f}}_u\right\|^2\sum_{v\in\mathcal{L}}\overline{|b_{u,v}|^2}} +\right.$$
$$\left. - \frac{\sum_{(u,k)\in\mathcal{K}^2}\left|\dot{\mathbf{f}}_u^H\mathbf{P}_\mathcal{K}^\perp\dot{\mathbf{f}}_k\right|^2\sum_{v\in\mathcal{L}}\overline{|b_{u,v}|^2\,|b_{k,v}|^2}}{\sum_{u\in\mathcal{K}}\left\|\mathbf{P}_\mathcal{K}^\perp\dot{\mathbf{f}}_u\right\|^2\sum_{v\in\mathcal{L}}\overline{|b_{u,v}|^2}} - \sum_{u\in\mathcal{K}}\left\|\mathbf{P}_\mathcal{K}^\perp\dot{\mathbf{f}}_u\right\|^2\sum_{v\in\mathcal{L}}\overline{|b_{u,v}|^2}\right]^{-1},$$

$$(42)$$

$$\overline{\Delta f^2} = \frac{N_0}{|h|^2}\left[\frac{1}{\beta} - \frac{\sum_{v\in\mathcal{L}}\left\|\mathbf{P}_\mathcal{L}^\perp\dot{\mathbf{g}}_v\right\|^4\sum_{u\in\mathcal{K}}\overline{|b_{u,v}|^4}}{\sum_{v\in\mathcal{L}}\left\|\mathbf{P}_\mathcal{L}^\perp\dot{\mathbf{g}}_v\right\|^2\sum_{u\in\mathcal{K}}\overline{|b_{u,v}|^2}} + 2\frac{\sum_{v\in\mathcal{L}}\left\|\mathbf{P}_\mathcal{L}^\perp\dot{\mathbf{g}}_v\right\|^4\sum_{u\in\mathcal{K}}\overline{|b_{u,v}|^2}^2}{\sum_{v\in\mathcal{L}}\left\|\mathbf{P}_\mathcal{L}^\perp\dot{\mathbf{g}}_v\right\|^2\sum_{u\in\mathcal{K}}\overline{|b_{u,v}|^2}} +\right.$$
$$\left. - \frac{\sum_{(v,l)\in\mathcal{L}^2}\left|\dot{\mathbf{g}}_v^T\mathbf{P}_\mathcal{L}^\perp\dot{\mathbf{g}}_l^*\right|^2\sum_{u\in\mathcal{K}}\overline{|b_{u,v}|^2\,|b_{u,l}|^2}}{\sum_{v\in\mathcal{L}}\left\|\mathbf{P}_\mathcal{L}^\perp\dot{\mathbf{g}}_v\right\|^2\sum_{u\in\mathcal{K}}\overline{|b_{u,v}|^2}} - \sum_{v\in\mathcal{L}}\left\|\mathbf{P}_\mathcal{L}^\perp\dot{\mathbf{g}}_v\right\|^2\sum_{u\in\mathcal{K}}\overline{|b_{u,v}|^2}\right]^{-1}.$$

$$(43)$$

We note that, for very small values of $\alpha$ and $\beta$ (with respect to upper limits of (38)), the (42) and (43) approximately compute to $N_0\alpha/|h|^2$ and $N_0\beta/|h|^2$, respectively.

### 4.5 Channel Estimation and Equalization

This subsection details the channel estimation module and its processing. In case of perfect timing and frequency recovery, under the assumption that the CIR is stationary within a block and that its delay spread is smaller than $T_{pr}$, the channel effects on the received signal can be expressed as:

$$R(n) = \text{diag } \{h\} \, FB(n)G^T + W(n),$$

where $\mathbf{h}$ is the $K$-dimensional vector of projections of $h(t)$ on the set $\{\psi_{k,0}(t)\}_k$ and $\mathbf{W}(n)$ is a $K \times M$ noise matrix of i.i. d. complex gaussian variates with zero mean and variance $2N_0$ (see (21)).

As in the detector MCI has a dominant weight with respect to the thermal noise, the selected equalization strategy is the ORC, which consists in left multiplying the received signal by the inverse of $\mathbf{h}$, i.e.:

$$\mathbf{P}(n) = \text{diag} \left\{ \frac{1}{\tilde{h}_k} \right\}_k \mathbf{R}(n). \tag{44}$$

We observe that the estimation of $\mathbf{h}$ from $\mathbf{R}(n)$ can be easily reduced to conventional estimation problem. The data symbols can be assumed known (during training) or can be estimated from the received signal. In this case, we apply a QAM mapping to the output of a QAM demapper (blind approach), assuming thus

$$b_{u,v} \cong \text{Map}_{QAM} \left[ \text{Demap}_{QAM} \left[ \widehat{b}_{u,v} \right] \right],$$

where

$$\widehat{b}_{u,v}(n) \triangleq \mathbf{f}_u^H \mathbf{R}(n) \mathbf{g}_v^*.$$

As the CIR is stationary in the block time $MT$, in accordance with the maximal-ratio combining approach (MRC), we can coherently sum the energies of all time codes transmitted on each carrier.

Performing time despreading, the received signal can be expressed as:

$$\mathbf{U}(n) \triangleq \mathbf{R}(n)\mathbf{G}^* = \text{diag } \{\mathbf{h}\} \sum_{u \in \mathcal{K}} [\mathbf{f}_u b_{u,0}(n), \ldots, \mathbf{f}_u b_{u,M-1}(n)] + \mathbf{W}(n)\mathbf{G}^*.$$

Assuming $\{b_{u,v}(n)\}$ known, the $K \times M$ matrix

$$\mathbf{Q}(n) \triangleq \sum_{u \in \mathcal{K}} [\mathbf{f}_u b_{u,0}(n), \ldots, \mathbf{f}_u b_{u,M-1}(n)] = \mathbf{FB}(n),$$

can be computed at each step of iteration. It is easy to see that the vector

$$\mathbf{r}(n) \triangleq \left[ \sum_{l=0}^{M-1} [\mathbf{U}(n)]_{0,l} [\mathbf{Q}(n)]_{0,l}^*, \ldots, \sum_{l=0}^{M-1} [\mathbf{U}(n)]_{K-1,l} [\mathbf{Q}(n)]_{K-1,l}^* \right]^T \tag{45}$$

combines on each carrier the energies of all useful signal transmitted and represents a sufficient statistic for estimating the CFR when the MSE criterion is applied. It is in fact straightforward to prove that:

$$\widehat{\mathbf{h}} = \arg \min_{\mathbf{h}} \text{E} \left\{ \left\| \mathbf{R} - \text{diag } \{\mathbf{h}\} \, \mathbf{FBG}^T \right\|_F^2 \right\}, \tag{46}$$

where $\|\cdot\|_F$ is the Frobenius norm, is equivalent, assuming random zero-mean i.i.d data, to:

$$\widehat{\mathbf{h}} = \arg\min_{\mathbf{h}} \sum_{k=0}^{K-1} |h_k|^2 \sum_{l=0}^{M-1} \mathrm{E}\left\{\left|[\mathbf{Q}]_{k,l}\right|^2\right\} - \mathrm{E}\left\{2\Re\left\{\mathbf{h}^H\mathbf{r}\right\}\right\}. \tag{47}$$

We note that, carrier by carrier, noise samples are independent while the $h_k$'s can be considered independent when the $T_{pr}\Delta f_c \approx 1$. In this case, minimization of (47) can be reduced to $K$ scalar parallel problems each aimed to determine a different $h_k$. The expected SNR in estimating $h_k$ on the $k$-th carrier results:

$$SNR_k = \frac{|h_k|^2}{2N_0} \sum_{u\in\mathcal{K}} |f_{k,u}|^2 \sum_{l=0}^{M-1} \overline{|b_{u,l}|^2}. \tag{48}$$

It is worth to note that condition $T_{pr}\Delta f_c \approx 1$ implies an inefficient channel use, as only half transmitted power is available for processing. When $\lceil T_{pr}\Delta f_c K\rceil = L << K$, where $\lceil \cdot \rceil$ rounds its argument to the nearest integer towards $\infty$ (ceiling function), we can exploit the fact that $\mathbf{h} = \mathbf{Th}_L$, where $\mathbf{T}$ is the normalized $K \times K$ DFT matrix transform. In this case direct estimation of the CIR becomes:

$$\widehat{\mathbf{h}}_L = \arg\min_{\mathbf{h}_L} \sum_{k=0}^{K-1} |h_k|^2 \sum_{l=0}^{M-1} \mathrm{E}\left\{\left|[\mathbf{Q}]_{k,l}\right|^2\right\} - \mathrm{E}\left\{2\Re\left\{\mathbf{h}_L^H\mathbf{r}_L\right\}\right\}, \tag{49}$$

where $\mathbf{r}_L$ is the normalized IDFT (inverse DFT) of $\mathbf{r}$ and $h_k$ is computed as $k$-th element of $\mathbf{Th}_L$. If the code $\mathbf{F}$ is structured such that $|f_{k,u}|^2$ is independent of $k$, (as for Hadamard codes), and all codes have the same energy, criterion (49) can be further simplified as:

$$\widehat{\mathbf{h}}_L = \arg\min_{\mathbf{h}_L} \|\mathbf{h}_L\|^2 \frac{\mathcal{E}_t}{K} - \mathrm{E}\left\{2\Re\left\{\mathbf{h}_L^H\mathbf{r}_L\right\}\right\}, \tag{50}$$

where $\varepsilon_t$ is total mean energy of a data block. Because only $L$ time taps are estimated, it is possible to prove the resulting SNR on $h_k$ (computed as DFT of $\mathbf{h}_L$) results improved of a factor $K/L$ with respect to (48).

As, now, any standard approach (e.g. Least Mean-Square-LMS) can be pursued, further developments are left to the implementer. Finally, we observe that $\mathbf{U}(n)$ is a by-product of data despreading together with the estimated data $b_{u,v}$ and that computing $\mathbf{Q}$ from $b_{u,v}$ costs about $MK \log_2 K$ operation, while $\mathbf{r}$ and $\mathbf{r}_L$ cost about $MK$ and $K \log_2 K$ additional operations respectively.

Finally, we note that other equalization strategies different from ORC can be easily implemented at almost the same computational cost. For example MRC would have led to:

$$\mathbf{P}(n) = \mathrm{diag}\left\{\frac{\widehat{h}_k^*}{\sigma^2+|\widehat{h}_k|^2}\right\}_k \mathbf{R}(n)$$

where $\sigma^2$ is the noise variance. Naturally, loop convergence analysis of previous section results accurate also for MRC when no deep fades occur.

## 4.6 Performance evaluation

This section presents an approximate analysis of the effects of the time and frequency errors on the SNR per symbol at the demodulator under condition of perfect channel estimation. For this purpose it is worth to focus on two possible working conditions of the receiver, i.e. when no explicit phase recovery is performed, and when external phase tracking is provided. In principle, phase recovery could be left up to the equalizer, as its convergence time has to be substantially shorter than the period of the residual frequency error in order for the whole loop to converge and be stable. As a matter of fact, a small lag, corresponding to a common phase rotation of the received block, always exists.

When no explicit phase recovery is performed, the system resorts to a pilot symbol, say $b_{0,0}$, as phase reference for the data in the block. The use of the pilot code as a reference allows a full phase correction on block by block basis, at the cost of a small SNR degradation, and does not rely on the speed of convergence of the channel estimator. In this case the TCM decoder is fed with $\hat{b}_{u,v}(n)\hat{b}_{0,0}^*(n)$, where $\hat{b}_{u,v}(n) = \mathbf{f}_u^H \mathbf{P}(n)\mathbf{g}_v^*$, and $\mathbf{P}(n)$ is given by (22). When external phase recovery is performed (e.g. before TCM decoding) the SNR degradation due to the use of a noisy phase reference disappears, at the cost of this extra processing.

After some algebra, assuming the loop to converge, at SNR's of practical interest, it is possible to express the SNR per symbol as:

$$SNR_{u,v} \approx \left\{ \left[ \left\| \mathbf{P}_\mathcal{K}\dot{\mathbf{f}}_u \right\|^2 + \left\| \mathbf{P}_\mathcal{K}\dot{\mathbf{f}}_0 \right\|^2 \right] \overline{\Delta\tau^2} + \left[ \|\mathbf{P}_\mathcal{L}\dot{\mathbf{g}}_v\|^2 + \|\mathbf{P}_\mathcal{L}\dot{\mathbf{g}}_0\|^2 \right] \overline{\Delta f^2} + \right.$$
$$\left. + \frac{2N_0}{\mathcal{E}_s} \left[ \| \operatorname{diag}\{1/h_k\}\mathbf{f}_u \|^2 + \| \operatorname{diag}\{1/h_k\}\mathbf{f}_0 \|^2 \right] \right\}^{-1},$$

where we neglected terms due to sole noise with respect to terms due to signal and noise.

In case of perfect phase recovery, after same algebra and similar approximations, the SNR per symbol results instead:

$$SNR_{u,v}^{ref} \approx \left\{ \left\| \mathbf{P}_\mathcal{K}\dot{\mathbf{f}}_u \right\|^2 \overline{\Delta\tau^2} + \|\mathbf{P}_\mathcal{L}\dot{\mathbf{g}}_v\|^2 \overline{\Delta f^2} + \frac{2N_0}{\mathcal{E}_s} \| \operatorname{diag}\{1/h_k\}\mathbf{f}_u \|^2 \right\}^{-1}.$$

Hence, assuming equal energy for pilot and data, the SNR loss amounts up to 3dB.

4.7 Digital implementation

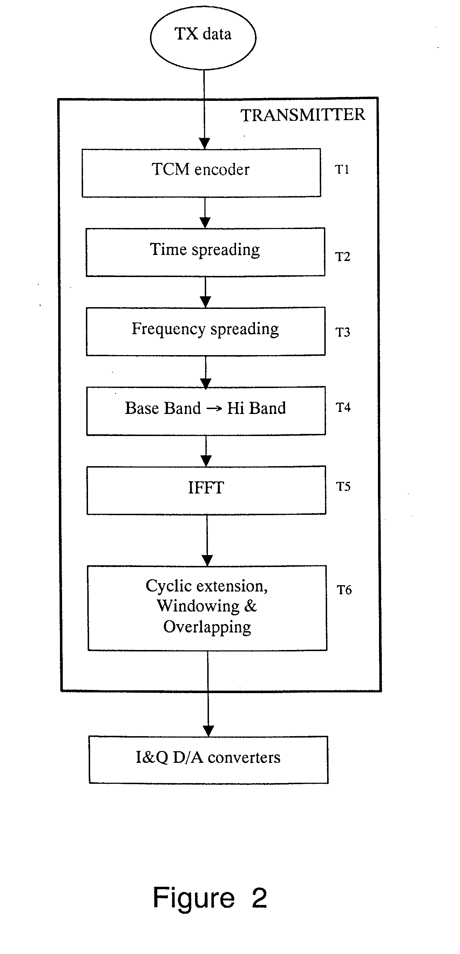

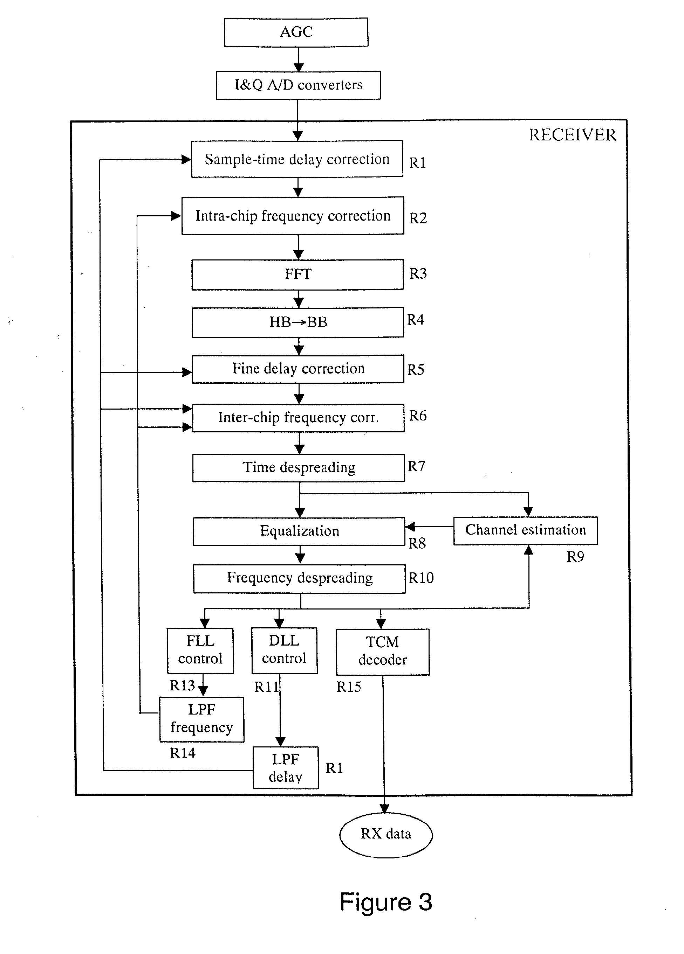

Figures 2 and 3 illustrate the structure of transmitter and receiver. Both processing have been realized in fixed point in C and assembly, in order to work in parallel in the same DSP. FFT, generalized FHT, TCM coder and Viterbi decoder have been moved from the DSP to a small FPGA, in order to reduce the computational load required by the former. In the following the processing of each block is detailed according to the implementation, without regard to its physical arrangement.

*4.7.1 Transmitter implementation*

This section details the processing in the transmitter depicted in Figure 2.

Module T1 performs TCM encoding and forms, from a packet of bits, the $K \times M$ sparse matrix $\mathbf{B}(n)$ of complex symbols that corresponds to a single time-frequency frame (data block). The number and the position of non-zero elements determine which time-frequency codes are allotted for that transmission. The phases of data symbols are differentially encoded with respect to $b_{0,0}(n)$ which is reserved for pilot purposes and carries no user data.

Module T2 performs the *M*-dimensional time spreading using the generalized FHT described in subsection 4.3. The module performs *K* times the *M*-dimensional fast matrix-vector products:

$$Y \equiv GB^T = [Gb_{0,\bullet}^T, Gb_{1,\bullet}^T, \dots, Gb_{K-1,\bullet}^T]$$

where $\mathbf{b}_{i,\bullet}$ is the *i*-th line of the sparse matrix **B.**

Module T3 performs *M* times the *K*-dimensional frequency spreading resorting to the same generalized FHT accordingly to:

$$S \equiv FY^T = [Fy_{0,\bullet}^T, Fy_{1,\bullet}^T, \dots, Fy_{M-1,\bullet}^T] = FBG^T$$

where $\mathbf{y}_{i,\bullet}$ is the $i$-th line of the sparse matrix $\mathbf{Y}$.

Module T4 allocates each $K$-dimensional column of $\mathbf{S}$ into the appropriate carriers synthesized by the following IFFT module. In order to relax the requirements of the D/A section and to ease the reduction of the out of band spectral leakage, the number of synthesized carriers, $N$, is larger than $K$. The signal elements are symmetrically allocated into the first and last IFFT bins, thus defining a low pass complex signal, while central IFFT bins corresponding to high frequencies are zero padded. In contrast to (1), but without affecting the analysis in the previous sections, the 0 frequency is left unused in order to avoid DC biases. Each $N$-dimensional vector resulting by the arrangement of module T4 is time-converted by IFFT in module T5 according to the standard radix-4 algorithm.

Module T6 cyclically extends the $N$ sample chip to a $N_{tot} = N + N_{pr} + N_{po} + 2N_{ro}$ samples, where $N = F_s / \Delta f_c$ is the useful part of the pulse and $F_s$ is the sampling frequency, and $N_{pr} = T_{pr} F_s$, $N_{po} = T_{po} F_s$ and $N_{ro} = \beta_{ro} T F_s$. The first and last $N_{ro}$ samples are shaped accordingly to the window (2). The last $N_{ro}$ samples from the current pulse are added to the first $N_{ro}$ samples of the next pulse according to the conventional OFDM time windowing processing.

*4.7.2 Receiver implementation*

This section details the processing in the receiver depicted in Figure 3. After AGC and A/D conversion of the I&Q components, the signal is buffered in bulks of $N_{tot} M$ complex samples that are jointly processed.

It is worth to dwell upon the structure of the presented frequency correction processing. For the purpose of reducing the computational load, the processing is split in an *intra-chip* (module R2) and in an *inter-chip* processing (module R7).

The *intra-chip* processing is pursued in time domain and consists in modulating the useful part of each chip by an $N$ sample segment of a suitable complex tone (prefix and postfix are skipped). The same tone segment is employed for all chips in the same bulk of samples, thus introducing an *inter-chip* phase error. As concerns each chip, the *inter-chip* phase error acts as a complex gain and, thus, can be compensated after the FFT. In this way only $K$ out of $N$ samples per chip need to be re-phased.

The *inter-chip* correction module generates a suitable $M$ sample segment of complex tone to compensate *inter-chip* phase errors. To guarantee phase continuity between adjacent data blocks (required by channel estimation module R9), block by block, the phase of the last sample is stored and used to generate the initial phase of the next tone segment.

With respect to the delay correction procedure, the processing is split in coarse and fine correction. The former consists in moving the boundaries of the $N_{tot} M$ data block of an integer number of samples in the receiver buffer (module R1). The latter performs sub-sample time corrections by interpolating samples in frequency domain (module R5).

In the following, we run into details of each module of the receiver in Figure 3, pointing out, whenever relevant, the number of (complex) operations (per data block) required by its processing.

Module R1 performs in time domain the function of delay correction at sample-time (coarse correction). The boundaries of the sample bulk to be processed are moved sample by sample in the memory buffer according with $\lfloor \tau (n) F_s \rfloor$, where $\lfloor \cdot \rfloor$ rounds its argument to the nearest integer towards $-\infty$ (floor function). It does not affect the computational cost.

Module R2 performs the function of *intra-chip* time-domain frequency correction. At the beginning of each $M$ chip data block, the tone segment:

$$\mathbf{e}_{sp}(n) = \begin{bmatrix} 1 & e^{-j2\pi \frac{f(n)}{F_s}} & \dots & e^{-j2\pi \frac{f(n)}{F_s}(N-1)} \end{bmatrix}^T$$

is computed. Each chip in the data block is modulated by $\mathbf{e}_{sp}(n)$. Only the $N$ useful samples of each chip are processed skipping prefixes and postfixes. R2 requires $N$ complex products to build $\mathbf{e}_{sp}(n)$ from

$$e^{-j2\pi \frac{f(n)}{F_s}},$$

and $NM$ complex products for re-modulating samples.

Module R3 performs the FFT: the $N$ useful samples from each chip are transposed to frequency domain by applying $M$ times an $N$-dimensional FFT. The resulting cost is about $\frac{NM}{2}\log_2 N$.

Module R4 collects the frequency bins corresponding to useful signal, reducing the data to a $M \times K$ complex matrix spread in time and frequency. No cost is associated to this operation.

Module R5 performs the fine delay correction in the frequency domain. The vectors

$$\mathbf{e}_r(n) = [e^{j2\pi\frac{v(n)}{N}} \quad e^{j2\pi\frac{2v(n)}{N}} \quad ... \quad e^{j2\pi\frac{K\,v(n)}{2N}} \,]^T$$

and $e_i(n)$ = reverse $\{\mathbf{e}_r(n)^*\}$ are computed once per data block. We denoted by $v(n)$ the fractional part of $\tau(n)F_s$, such that $\tau(n)F_s = \lfloor \tau(n)F_s \rfloor + v(n)$, and by reverse $\{\cdot\}$ the function that reverses the positions of the elements of its vector argument. Vectors $\mathbf{e}_r(n)$ and $\mathbf{e}_i(n)$ multiply their corresponding $K/2$ code bins in each chip of the block. The cost for computing $\mathbf{e}_r(n)$ and $\mathbf{e}_i(n)$ from

$$e^{j2\pi\frac{v(n)}{N}}$$

consists in $K/2$ products, while the time corrections requires $KM$ operations.

Module R6 performs the function of *inter-chip* frequency correction. The vector:

$$\mathbf{e}_{sy}(n) = e^{-j\theta(n)}[\, 1 \ e^{-j2\pi f(n)T} \ ... \ e^{-j2\pi f(n)(M-1)T}\,]^T$$

is computed and stored at the beginning of each $M$ chip data block. Each chip is then multiplied by its corresponding phase. The phase term $\theta(n)$, required to guarantee inter block phase continuity, is updated in accordance with

$$\theta(n) = \text{mod}\{\theta(n-1) + 2\pi f(n-1)MT\}_{2\pi}.$$

The computational cost consists of $M$ products for $\mathbf{e}_{sy}(n)$ and in $KM$ operations for re-phasing data.

Module R7 performs the $M$-dimensional time despreading resorting $K$ times to the inverse generalized FHT:

$$U = RG^* = [G^H r_{0,\bullet}^T, \ G^H r_{1,\bullet}^T,.... , \ G^H r_{M-1,\bullet}^T]^T,$$

where $r_{i,\bullet}$ is the $i$-th row of **R.** The computational cost consists $KM \log_2 M$ operations.

Module R8 performs the ORC processing using the CFR estimated by module R9. Each column of the data block is equalized according to (44), thus leading to:

$$\mathbf{Z} \triangleq \text{diag}\left\{1/\hat{h}_k\right\} \mathbf{U}.$$

The computational cost per data block consists in $KM$ operations.

Module R9 performs the channel estimation processing using the detected data (from module R10) and the time-despread received signal (from module R7). Any approach to implement minimization (50) or (47) (e.g. component by component) can be pursued. In both cases matrix

$$Q(n) = FB = [Fb_{0,\bullet}, Fb_{1,\bullet},...., Fb_{M-1,\bullet}]$$

needs to be computed from training or detected data applying $M$ times a $K$-dimensional frequency spreading. When blind approach is used, we assume $\mathbf{B} \cong \text{Map}_{QAM}[\text{Demap}_{QAM}[\mathbf{B}]]$. In case of minimization of (47), in order to compute **r** from (45), about $MK$ operations are required, while in case of minimization of (50) additional $K \log_2 K$ operations are needed to get $\mathbf{r}_L$. The final computational cost per data block may vary depending on the selected strategy.

Module R10 performs $M$ times the $K$-dimensional frequency despreading resorting to the inverse generalized

FHT:

$$\hat{B} = F^H Z = [F^H z_{\bullet,0}, F^H z_{\bullet,1}, \dots, F^H z_{\bullet,M-1}],$$

where $z_{\bullet,i}$ denotes the $i$-th column of the matrix $Z$ from ORC module R8. The cost, thus, results $KM \log_2 K$ operations.

Modules R11 and R13 compute the control signals in (9). Owing to code properties, by simple passages, the control signals in (9), when $|I| < KM/2$, result:

$$\frac{\partial}{\partial \tau} \lambda(\Delta f, \Delta \tau) = 2 \sum_{(u,v) \in \mathcal{I}} \Re \left\{ \hat{b}_{u,v}^* \sum_{k \in \mathcal{U}_u - \{u\}} \dot{\mathbf{f}}_u^H \mathbf{f}_k \hat{b}_{k,v} \right\},$$

$$\frac{\partial}{\partial f} \lambda(\Delta f, \Delta \tau) = 2 \sum_{(u,v) \in \mathcal{I}} \Re \left\{ \hat{b}_{u,v}^* \sum_{l \in \mathcal{V}_v - \{v\}} \mathbf{g}_v^T \dot{\mathbf{g}}_l^* \hat{b}_{u,l} \right\}, \qquad (54)$$

or, when $|I| \geq KM/2$,

$$\frac{\partial}{\partial \tau} \lambda(\Delta f, \Delta \tau) = -2 \sum_{(u,v) \in \mathcal{I}^c} \Re \left\{ \hat{b}_{u,v}^* \sum_{k \in \mathcal{U}_u - \{u\}} \dot{\mathbf{f}}_u^H \mathbf{f}_k \hat{b}_{k,v} \right\},$$

$$\frac{\partial}{\partial f} \lambda(\Delta f, \Delta \tau) = -2 \sum_{(u,v) \in \mathcal{I}^c} \Re \left\{ \hat{b}_{u,v}^* \sum_{l \in \mathcal{V}_v - \{v\}} \mathbf{g}_v^T \dot{\mathbf{g}}_l^* \hat{b}_{u,l} \right\}. \qquad (55)$$

The coefficients of development (54) (and (55)) and sets $U_u$ and $V_v$ are given by equation (19). The total number of operations per data block, for both time and frequency control signals, thus, results about min $\{|I|, \frac{MK}{2}\} \log_2 KM$.

From eq. (54) and (55) it can be appreciated that module R11 controls modules R1 and R5 to decrease or increase the delay of the received signal whilst module R13 controls modules R2 and R6 to change the reference frequency. It also follows from the same equations that the energy content of the matrix of reconstructed QAM complex symbols, $B$, is maximized when the output of modules R11 and R13 is zero.

Modules R12 and R14 are low-pass loop filters working at data block rate, thus, their computational cost can be considered negligible.

Module R15 is fed with symbols extracted from each received block. Its tasks are to scale and re-phase symbols on the basis of pilot symbol $b_{0,0}$, and to decode the TCM symbols by resorting to the Viterbi algorithm. It can comprise a phase estimation module when the channel estimation module is not active. As TCM decoding and phase restoration are standard subjects, they fall outside the scope of the invention and will not be further discussed.

In conclusion, assuming $N = 2 \cdot K$ and disregarding channel estimation and TCM decoding, the worst case cost (i. e. when $|I| = MK/2$) per data block turns out to be $\approx MK \left[\frac{3}{2} \log_2 KM + \log_2 K + 6\right] + \frac{5}{2}K + M$ operations.

## 5. Conclusions

We presented a new strategy of time-frequency spreading based on orthogonal codes and fast transforms. The main feature of the proposed signal structure is that the receiver can effectively evaluate and compensate the symbol timing and frequency errors of the multicode transmission by exploiting signal structure in time for frequency tracking and signal structure in frequency for time tracking. The receiver implements a quasi-optimal time-frequency MLE.

A class of *ad hoc* codes is introduced. Both spreading and despreading require $KM \log_2 KM$ operations while the control signals of the tracking loop require an additional computational cost proportional to $\log_2 KM$. The proportionality factor depends on the transmission load and is minimized when all allowable codes are transmitted.

The channel equalizer integrated in the receiver loop is able to compensate the channel distortion due to multipath in order to improve both symbol detection and time-frequency estimation. The channel estimation problem from time-frequency spread data is reduced to a standard vectorial estimation problem, hence allowing the use of conventional strategies in frequency or in time.

Loop convergence analysis and closed form SNR are presented in case of perfect channel estimation (clairvoyant approach) in order to evaluate system performance and to dimension its free parameters.

While preferred embodiments of the invention have been disclosed, several details may be changed within the scope of the invention by substituting equivalent arrangements or by dispensing with unessential functions. By way of example, the frequency correction feedback loops comprising blocks R2-R6-R13-R14 in the receiver might be replaced with an analog loop installed upstream of the digital processor. The channel estimation loop comprising block R9 could be dispensed with in special cases. Also, although the invention finds an especially advantageous application with TCM encoding, it can operate with any type of communication using constellations of QAM complex symbols generally. Other modifications will occur to persons skilled in the art within the scope of the attached claims.

**Claims**

1. A method of multi-carrier CDMA digital data transmission, wherein packets of bits are converted to complex symbols, which are then modulated onto a plurality of carrier frequencies during successive time intervals, **characterized in that** the complex symbols are modulated onto respective orthogonal matrix-like codes ($C^{u,v}$) each having a first dimension ($K$) extending across said plurality of carrier frequencies and a second dimension ($M$) extending over a predetermined time interval, said modulated codes being transmitted in superposition in said successive time intervals.

2. The method of digital data transmission of claim 1, **characterized in that** each of said orthogonal matrix-like codes ($C^{u,v}$) is obtained as a product of a pair of vector-like codes ($f_u$, $g_v$), which are respectively associated to frequency and time and belonging to respective sets of orthogonal codes.

3. The method of digital data transmission of claim 2, **characterized in that** each of said sets of orthogonal vector-like codes obey to the following recursive equation:

$$\mathbf{h}_i^m \triangleq \begin{cases} \begin{bmatrix} \alpha_m \mathbf{h}_i^{m-1} \\ \gamma_m \mathbf{h}_i^{m-1} \end{bmatrix}, & \text{if } 0 \leq i \leq 2^{m-1} - 1; \\[2em] \begin{bmatrix} \beta_m \mathbf{h}_{i-2^{m-1}}^{m-1} \\ -\delta_m \mathbf{h}_{i-2^{m-1}}^{m-1} \end{bmatrix}, & \text{if } 2^{m-1} \leq i \leq 2^m - 1; \end{cases}$$

where $\mathbf{h}_i^m$ is either of said vector-like codes ($f_i$ or $g_i$), m is the base-two logarithm of the size of the respective vector-like code, $\mathbf{h}_0^0 \equiv 1$, and

$$\begin{array}{rcl} |\alpha_i|^2 + |\gamma_i|^2 & = & 1, \\ |\beta_i|^2 + |\delta_i|^2 & = & 1, \\ \alpha_i^* \beta_i - \gamma_i^* \delta_i & = & 0. \end{array} \qquad \text{for} \qquad i \in \{1, \ldots, m\}.$$

4. The method of digital data transmission of claim 3, **characterized in that** said superposition of modulated codes is generated by:

   - computing the following $M$-dimensional matrix-vector products $K$ times:

   $$Y \equiv GB^T = [Gb^T{}_{0,\bullet}, Gb^T{}_{1,\bullet}, \ldots, Gb^T{}_{K-1,\bullet}]$$

   where $\mathbf{b}_{i,\bullet}$ is the $i$-th line of the sparse matrix $\mathbf{B}$ of data to be transmitted, $\mathbf{G}$ is a matrix whose columns are said vector-like codes associated to the time intervals,
   - and then computing the following $K$-dimensional matrix-vector products $M$ times:

$$S \equiv FY^T = [Fy^T_{0,\bullet}, Fy^T_{1,\bullet}, \ldots, Fy^T_{M-1,\bullet}] = FBG^T$$

where $\mathbf{y}_{i,\bullet}$ is the $i$-th line of the sparse matrix $\mathbf{Y}$, $\mathbf{F}$ is a matrix whose columns are said vector-like codes associated to the carrier frequencies, and $\mathbf{S}$ is the superposition of the modulated codes.

5. The method of digital data transmission of claim 4, **characterized in that** each of said matrix-vector products ($\mathbf{Gb}^T_{0,\bullet}$, $\mathbf{Gb}^T_{1,\bullet}$, ... , $\mathbf{Gb}^T_{K-1,\bullet}$, $\mathbf{Fy}^T_{0,\bullet}$, $\mathbf{Fy}^T_{1,\bullet}$, ... ,$\mathbf{Fy}^T_{M-1,\bullet}$), by letting $\mathbf{H}_m$ be the matrix $\mathbf{G}$ or $\mathbf{F}$ and by letting $\mathbf{x}^m$ be either of columns $\mathbf{b}^T_{i,.}$ or $\mathbf{y}^T_{i,.}$, is computed by the following recursive transform equation:

$$\mathbf{y}^m = \begin{bmatrix} \alpha_m \mathbf{y}_0^{m-1} \\ \gamma_m \mathbf{y}_0^{m-1} \end{bmatrix} + \begin{bmatrix} \beta_m \mathbf{y}_1^{m-1} \\ -\delta_m \mathbf{y}_1^{m-1} \end{bmatrix}.$$

where $\mathbf{y}^m = \mathbf{H}_m\mathbf{x}^m$ is the transform of $\mathbf{x}^m$, $\mathbf{y}_i^{m-1} = \mathbf{H}_{m-1}\mathbf{x}_i^{m-1}$ is the transform of $\mathbf{x}_i^{m-1}$, and $\mathbf{x}^m = [\mathbf{x}_0^{m-1\,T}, \mathbf{x}_1^{m-1\,T}]^T$ and

$$\begin{aligned} |\alpha_i|^2 + |\gamma_i|^2 &= 1, \\ |\beta_i|^2 + |\delta_i|^2 &= 1, \\ \alpha_i^*\beta_i - \gamma_i^*\delta_i &= 0. \end{aligned}$$

for $i \in \{1,\ldots,m\}$.

6. A digital data transmitter for implementing the transmission method of claim 1, **characterized in that** it comprises:

  - a data encoder module (T1) for encoding packets of bits into a sparse matrix of $K \times M$ QAM complex symbols corresponding to a single time-frequency frame, where $K$ is the number of carrier frequencies and $M$ is the number of time intervals in the frame;

  - a time-spreading module (T2) which performs an $M$-dimensional time-spreading of the above sparse matrix;

  - a frequency-spreading module (T3) which performs a $K$-dimensional frequency-spreading of the matrix generated by the time-spreading block to provide a superposition of modulated orthogonal time-frequency codes;

  - a time-conversion module (T4-T5-T6) for providing a digital signal in the time domain to a pair of I&Q D/A converters, by subjecting the superposition of codes issued from the frequency-spreading module to inverse discrete Fourier transform, to cyclic symbol extension, and to time-windowing.

7. The transmitter of claim 6, **characterized in that** the time-spreading module (T2) computes the following $M$-dimensional matrix-vector products $K$ times:

$$Y \equiv GB^T = [Gb^T_{0,\bullet}, Gb^T_{1,\bullet}, \ldots, Gb^T_{K-1,\bullet}]$$

where $\mathbf{b}_{i,\bullet}$ is the $i$-th line of the sparse matrix $\mathbf{B}$ of data to be transmitted, $\mathbf{G}$ is a matrix whose columns are said vector-like codes associated to the time intervals,
and **in that** the frequency-spreading module (T3) computes the following $K$-dimensional matrix-vector products $M$ times:

$$S \equiv FY^T = [Fy^T_{0,\bullet}, Fy^T_{1,\bullet}, \ldots, Fy^T_{M-1,\bullet}] = FBG^T$$

where $\mathbf{y}_{i,\bullet}$ is the $i$-th line of the matrix $\mathbf{Y}$, $\mathbf{F}$ is a matrix whose columns are said vector-like codes associated to the carrier frequencies, and $\mathbf{S}$ is the matrix of coefficients that are modulated on said carrier frequencies over said time intervals.

8. The transmitter of claim 7, **characterized in that** each of the time-spreading module and the frequency spreading module computes the respective matrix-vector products by a recursive transform as defined in claim 5.

**9.** The transmitter of any of claims 6 to 8, **characterized in that** said data encoder module comprises a TCM encoder.

**10.** A digital data receiver for implementing the method of claim 1, **characterized in that** it comprises:

- a coarse delay corrector module (R1) for receiving the I&Q components of the transmitted signal after A/D conversion, and for correcting the delay of the I&Q components by an integer number of samples to deliver respective frames of time-aligned signal samples;

- a frequency-conversion module (R3-R4) for converting the time-aligned signal samples to the frequency domain by removing the cyclic symbol extensions and for subjecting the remaining samples in each time interval of the respective frames of samples to direct Discrete Fourier transform, thereby generating successive superpositions of channel-affected time-frequency spread symbols constituting a matrix of $K \times M$ complex symbols corresponding to a single time-frequency frame, where $K$ is the number of carrier frequencies and $M$ is the number of time intervals in the frame;

- a time-despreading module (R7) for time-despreading the above matrix of $K \times M$ complex symbols along the $M$-dimension;

- a frequency-despreading module (R10) for frequency-despreading the time-despread matrix generated by the time-despreading module along the K-dimension to generate a matrix of reconstructed QAM complex symbols;

- a symbol decoder module (R15) for converting said matrix of reconstructed QAM complex symbols into a packet of bits.

**11.** The receiver of claim 10, **characterized in that** it further comprises a time correction feedback loop (R11-R12) from the output of the frequency-despreading module (R10) to control the time delay in the coarse delay corrector module (R1) so that the energy content of said matrix of reconstructed complex symbols is maximized.

**12.** The receiver of claim 11, **characterized in that** said time-alignment feedback loop (R11-R12) comprises a time-error estimator for receiving said matrix of reconstructed QAM complex symbols and computing the time derivative of the energy function of the transmitted code for each symbol.

**13.** The receiver of claim 12, **characterized in that** said time-error estimator generates an error signal for controlling the coarse delay corrector module by the following calculation:

$$2 \sum_{(u,v) \in \mathcal{I}} \Re \left\{ \widehat{b}_{u,v}^* \sum_{k} \dot{\mathbf{f}}_u^H \mathbf{f}_k \widehat{b}_{k,v} \right\},$$

where $\{\widehat{b}_{u,v}\}$ is the matrix of the reconstructed QAM complex symbols, $\mathbf{f}_u$ is the $u$-th vector-like frequency code associated to the orthogonal matrix-like code ($\mathbf{C}^{u,v}$) used in transmission, $\dot{\mathbf{f}}_u$ is obtained as

$$\dot{\mathbf{f}}_u \triangleq \left[ \dot{f}_{0,u}, \ldots, \dot{f}_{K-1,u} \right]^T = \mathrm{diag}\left\{ j2\pi\Delta f_c \left( k - \frac{K}{2} \right) \right\}_k \mathbf{f}_u,$$

where $\Delta f_c$ is the frequency gap between adjacent carriers,
and where the outer summation is extended over the index set, $\mathcal{I}$, of all QAM complex symbols used in the transmission.

**14.** The receiver of claim 12, **characterized in that** said time-error estimator generates an error signal for controlling the coarse delay corrector module by the following calculation:

$$-2 \sum_{(u,v)\in\mathcal{I}^c} \Re\left\{\widehat{b}^*_{u,v} \sum_{k} \dot{\mathbf{f}}^H_u \mathbf{f}_k \widehat{b}_{k,v}\right\},$$

where $\{\widehat{b}_{u,v}\}$ is the matrix of the reconstructed QAM complex symbols, $\mathbf{f}_u$ is the $u$-th vector-like frequency code associated to the orthogonal matrix-like code ($\mathbf{C}^{u,v}$) used in transmission, $\dot{\mathbf{f}}_u$ is obtained as

$$\dot{\mathbf{f}}_u \triangleq \left[\dot{f}_{0,u}, \ldots, \dot{f}_{K-1,u}\right]^T = \operatorname{diag}\left\{j2\pi\Delta f_c\left(k - \frac{K}{2}\right)\right\}_k \mathbf{f}_u,$$

where $\Delta f_c$ is the frequency gap between adjacent carriers,
and where the outer summation is extended over the index set, $\mathcal{I}^c$, of all QAM complex symbols *not* used in the transmission.

15. The receiver of any of claims 10 to 14, **characterized in that** it further comprises:

- an intra-chip frequency corrector module (R2) for receiving the output from the coarse delay corrector module and for performing an intra-chip frequency correction in the time domain on the time-aligned signal samples;

- an inter-chip frequency corrector module (R6) for receiving the output from the frequency conversion module (R3-R4) and for performing an inter-chip frequency correction;

- a frequency-recovery feedback loop (R13-R14) from the output of the frequency-despreading module (R10) to control the frequency offset in the intra-chip frequency corrector module (R2) and in the inter-chip frequency corrector module (R6) so that the energy content of said matrix of reconstructed QAM complex symbols is maximized.

16. The receiver of claim 15, **characterized in that** said frequency-recovery feedback loop (R13-R14) comprises a frequency-error estimator for receiving said matrix of reconstructed QAM complex symbols and computing the frequency derivative of the energy function of the transmitted code for each symbol.

17. The receiver of claim 16, **characterized in that** said frequency-error estimator generates an error signal for controlling the intra-chip frequency corrector module (R2) and the inter-chip frequency corrector module (R6) by the following calculation:

$$2 \sum_{(u,v)\in\mathcal{I}} \Re\left\{\widehat{b}^*_{u,v} \sum_{l} \mathbf{g}^T_v \dot{\mathbf{g}}^*_l \widehat{b}_{u,l}\right\}$$

where $\{\widehat{b}_{u,v}\}$ is the matrix of the reconstructed QAM complex symbols, $\mathbf{g}_v$ is the $v$-th vector-like time code associated to the orthogonal matrix-like code ($\mathbf{C}^{u,v}$) used in transmission, $\dot{\mathbf{g}}_v$ is obtained as

$$\dot{\mathbf{g}}_v \triangleq \left[\dot{g}_{0,v}, \ldots, \dot{g}_{M-1,v}\right]^T = \operatorname{diag}\left\{-j2\pi T\left(l - \frac{M}{2}\right)\right\}_l \mathbf{g}_v.$$

where $T$ is the chip repetition time,
and where the outer summation is extended over the index set, $\mathcal{I}$, of all QAM symbols used in the transmission.

18. The receiver of claim 16, **characterized in that** said frequency-error estimator generates an error signal for controlling the intra-chip frequency corrector module (R2) and the inter-chip frequency corrector module (R6) by the following calculation:

$$-2 \sum_{(u,v)\in \mathcal{I}^c} \Re \left\{ \widehat{b}_{u,v}^* \sum_l \mathbf{g}_v^T \dot{\mathbf{g}}_l^\star \widehat{b}_{u,l} \right\}$$

where $\{\widehat{b}_{u,v}\}$ is the matrix of the reconstructed QAM complex symbols, $\mathbf{g}_v$ is the $v$-th vector-like time code associated to the orthogonal matrix-like code ($\mathbf{C}^{u,v}$) used in transmission, $\dot{\mathbf{g}}_v$ is obtained as

$$\dot{\mathbf{g}}_v \triangleq \left[ \dot{g}_{0,v}, \ldots, \dot{g}_{M-1,v} \right]^T = \mathrm{diag}\left\{ -j2\pi T \left( l - \frac{M}{2} \right) \right\}_l \mathbf{g}_v.$$

where $T$ is the chip repetition time,
and where the outer summation is extended over the index set, $\mathcal{I}^c$, of all QAM complex symbols *not* used in the transmission.

**19.** The receiver of any of claims 10 to 18, **characterized in that** said QAM decoder module comprises a TCM decoder (R15).

Figure 1

Figure 2

```
                    ┌─────────────────────┐
                    │        AGC          │
                    └─────────────────────┘
                              │
                              ▼
                    ┌─────────────────────┐
                    │  I&Q A/D converters │
                    └─────────────────────┘
                              │
                              ▼
┌──────────────────────────────────────────────────────────────┐
│                                              RECEIVER         │
│       ┌──────────────────────────────────┐                   │
│   ┌──►│   Sample-time delay correction    │ R1               │
│   │   └──────────────────────────────────┘                   │
│   │                 │                                         │
│   │                 ▼                                         │
│   │   ┌──────────────────────────────────┐                   │
│   │ ┌►│   Intra-chip frequency correction │ R2               │
│   │ │ └──────────────────────────────────┘                   │
│   │ │               │                                         │
│   │ │               ▼                                         │
│   │ │   ┌──────────────────────────────┐                     │
│   │ │   │            FFT                │ R3                  │
│   │ │   └──────────────────────────────┘                     │
│   │ │               │                                         │
│   │ │               ▼                                         │
│   │ │   ┌──────────────────────────────┐                     │
│   │ │   │          HB→BB               │ R4                  │
│   │ │   └──────────────────────────────┘                     │
│   │ │               │                                         │
│   │ │               ▼                                         │
│   │ ├──►│   Fine delay correction       │ R5                 │
│   │ │   └──────────────────────────────┘                     │
│   │ │               │                                         │
│   │ │               ▼                                         │
│   │ ├──►│  Inter-chip frequency corr.   │ R6                 │
│   │ │   └──────────────────────────────┘                     │
│   │ │               │                                         │
│   │ │               ▼                                         │
│   │ │   ┌──────────────────────────────┐                     │
│   │ │   │      Time despreading         │ R7                 │
│   │ │   └──────────────────────────────┘                     │
│   │ │               │                  └──────────┐          │
│   │ │               ▼                             │          │
│   │ │   ┌──────────────────┐   ┌──────────────────────┐      │
│   │ │   │   Equalization    │◄──│ Channel estimation   │      │
│   │ │   └──────────────────┘   └──────────────────────┘      │
│   │ │               │        R8                R9            │
│   │ │               ▼                             ▲          │
│   │ │   ┌──────────────────┐                      │          │
│   │ │   │Frequency despreading│ R10               │          │
│   │ │   └──────────────────┘──────────────────────┘          │
│   │ │        │         │          │                          │
│   │ │        ▼         ▼          ▼                          │
│   │ │   ┌────────┐ ┌────────┐ ┌────────┐                     │
│   │ │   │  FLL   │ │  DLL   │ │  TCM   │                     │
│   │ │   │control │ │control │ │decoder │                     │
│   │ │   └────────┘ └────────┘ └────────┘                     │
│   │ │    R13 │     R11│        R15 │                         │
│   │ │        ▼        │            │                         │
│   │ │   ┌────────┐    │            │                         │
│   │ └───│  LPF   │    │            │                         │
│   │     │frequency│   │            │                         │
│   │     └────────┘    │            │                         │
│   │      R14          ▼            │                         │
│   │             ┌────────┐         │                         │
│   └─────────────│  LPF   │ R1      │                         │
│                 │ delay  │         │                         │
│                 └────────┘         │                         │
└────────────────────────────────────┼─────────────────────────┘
                                      ▼
                                 ╭─────────╮
                                 │ RX data │
                                 ╰─────────╯
```

# Figure 3

European Patent
Office

**EUROPEAN SEARCH REPORT**

Application Number

EP 02 42 5773

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 179 904 A (MATSUSHITA ELECTRIC IND CO LTD) 13 February 2002 (2002-02-13) <br> * abstract * <br> * column 1, line 10 - line 13 * <br> * column 6, line 6 - column 8, line 24 * <br> * column 9, line 3 - column 10, line 48 * <br> * column 12, line 40 - column 13, line 7; figures 6,9,10,15,16,19 * | 1,2,6,9, 10,19 | H04L5/02 |
| A | | 3-5,7,8, 11-18 | |
| A | DEKORSY A ET AL: "Exploiting time and frequency diversity by iterative decoding in OFDM-CDMA systems" <br> GLOBAL TELECOMMUNICATIONS CONFERENCE GLOBECOM '99, <br> 1999, pages 2576-2580, XP010373417 <br> * page 2576 - page 2577 * | 1-19 | |
| A | MATSUTANI H ET AL: "MULTI-CARRIER DS-CDMA USING FREQUENCY SPREAD CODING" <br> IEEE INTERNATIONAL CONFERENCE ON PERSONAL WIRELESS COMMUNICATIONSPROCEEDINGS, XX, XX, <br> 17 February 1999 (1999-02-17), pages 244-248, XP002947587 <br> * page 244 - page 245; figures 2-4 * | 1-19 | TECHNICAL FIELDS SEARCHED (Int.Cl.7) <br><br> H04L <br> H04B |

-/--

The present search report has been drawn up for all claims

| Place of search | Date of completion of the search | Examiner |
|---|---|---|
| MUNICH | 24 February 2003 | Marzenke, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

European Patent
Office

**EUROPEAN SEARCH REPORT**

Application Number

EP 02 42 5773

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SATO T ET AL: "Two dimensional equalization scheme of orthogonal coding multi-carrier CDMA under frequency selective fading environment" UNIVERSAL PERSONAL COMMUNICATIONS, 1998. ICUPC '98. IEEE 1998 INTERNATIONAL CONFERENCE ON FLORENCE, ITALY 5-9 OCT. 1998, NEW YORK, NY, USA,IEEE, US, 5 October 1998 (1998-10-05), pages 1215-1219, XP010315046 ISBN: 0-7803-5106-1 * page 1215 - page 1217; figure 4 * | 1-19 | |
| A | US 6 084 932 A (VEINTIMILLA GREGORY J) 4 July 2000 (2000-07-04) * column 7, line 14 - column 9, line 16; figures 2,4A-4D * | 11-18 | |
| A | HONG S ET AL: "An efficient timing synchronization technique for FFT based multi-carrier direct sequence spread spectrum transceiver" MILITARY COMMUNICATIONS CONFERENCE, 1998. MILCOM 98. PROCEEDINGS., IEEE BOSTON, MA, USA 18-21 OCT. 1998, NEW YORK, NY, USA,IEEE, US, 18 October 1998 (1998-10-18), pages 713-717, XP010307937 ISBN: 0-7803-4506-1 * page 715, left-hand column, paragraph C - page 716, left-hand column, paragraph IV; figures 3,4 * | 11-18 | TECHNICAL FIELDS SEARCHED (Int.Cl.7) |

The present search report has been drawn up for all claims

| Place of search | Date of completion of the search | Examiner |
|---|---|---|
| MUNICH | 24 February 2003 | Marzenke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 42 5773

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2003

| Patent document cited in search report | | Publication date | Patent family member(s) | | Publication date |
|---|---|---|---|---|---|
| EP 1179904 | A | 13-02-2002 | AU | 3954201 A | 24-09-2001 |
| | | | EP | 1179904 A1 | 13-02-2002 |
| | | | CN | 1364358 T | 14-08-2002 |
| | | | WO | 0169826 A1 | 20-09-2001 |
| | | | JP | 2002190788 A | 05-07-2002 |
| | | | US | 2002159425 A1 | 31-10-2002 |
| US 6084932 | A | 04-07-2000 | US | 5914981 A | 22-06-1999 |
| | | | US | 5943375 A | 24-08-1999 |
| | | | WO | 9835458 A1 | 13-08-1998 |
| | | | WO | 9835455 A1 | 13-08-1998 |

EPO FORM P0459

For more details about this annex : see Official Journal of the European Patent Office, No. 12/82